(19) Europäisches Patentamt

European Patent Office

Office européen des brevets

(11) **EP 2 826 970 B1**

## (12) EUROPEAN PATENT SPECIFICATION

(45) Date of publication and mention
of the grant of the patent:
**05.09.2018 Bulletin 2018/36**

(21) Application number: **12870973.0**

(22) Date of filing: **14.03.2012**

(51) Int Cl.:
*F01N 3/20* (2006.01)     *F02D 41/02* (2006.01)
*F02B 29/04* (2006.01)     *F02D 41/20* (2006.01)
*F02M 26/06* (2016.01)     *F02M 26/50* (2016.01)
*F02M 26/15* (2016.01)     *F02M 26/23* (2016.01)
*F02D 41/00* (2006.01)     *F01N 3/08* (2006.01)
*F01N 13/00* (2010.01)     *F02M 26/47* (2016.01)
*F02M 26/05* (2016.01)

(86) International application number:
**PCT/JP2012/056546**

(87) International publication number:
**WO 2013/136463 (19.09.2013 Gazette 2013/38)**

### (54) INTERNAL COMBUSTION ENGINE WITH CONTROL UNIT

VERBRENNUNGSMOTOR MIT STEUERUNGSVORRICHTUNG

MOTEUR À COMBUSTION INTERNE AVEC DISPOSITIF DE COMMANDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**21.01.2015 Bulletin 2015/04**

(73) Proprietor: **TOYOTA JIDOSHA KABUSHIKI KAISHA**
**Toyota-shi, Aichi-ken, 471-8571 (JP)**

(72) Inventor: **KURISAKA, Itsuya**
**Toyota-shi, Aichi-ken, 471-8571 (JP)**

(74) Representative: **D Young & Co LLP**
**120 Holborn**
**London EC1N 2DY (GB)**

(56) References cited:
**EP-A1- 1 422 409     EP-A1- 2 241 731**
**EP-A2- 1 256 704     JP-A- 2002 303 128**
**JP-A- 2003 020 930     JP-A- 2007 162 501**
**JP-A- 2007 198 277     JP-A- 2008 298 024**
**JP-A- 2009 221 913     US-A1- 2005 028 518**

**Description**

Technical Field

The present invention relates in general to control devices for internal combustion engines, such as automobile engines, and in particular to improved control of internal combustion engines containing a NOx storage/reduction catalyst in an exhaust gas emission system.

Background Art

It has been a concern that diesel and other lean-burn engines tend to emit relatively large amounts of nitrogen oxides (hereinafter, "NOx"). A conventional solution is to equip the engine with an EGR (exhaust gas recirculation) system that recirculates part of exhaust gas to an intake air path (see, for example, Patent Document 1 listed below).

A conventional EGR system, disclosed in Patent Document 2, is an "MPL (middle pressure loop)-EGR system" that includes both a high-pressure EGR mechanism (hereinafter, "HPL-EGR mechanism") and a low-pressure EGR mechanism (hereinafter, "LPL-EGR mechanism").

The HPL (high pressure loop)-EGR mechanism recirculates exhaust gas from a part of the exhaust air path (e.g., exhaust manifold) located upstream of the turbine of a turbocharger to a part of the intake air path located downstream of the compressor of the turbocharger. The LPL (low pressure loop)-EGR mechanism recirculates exhaust gas from a part of the exhaust air path located downstream of the turbine of the turbocharger to a part of the intake air path located upstream of the compressor of the turbocharger.

The MPL-EGR system activates only the HPL-EGR mechanism in a low-load engine operating region, thereby recirculating relatively hot exhaust gas for stable combustion. That in turn reduces emission of HC, CO, etc. In contrast, the MPL-EGR system activates only the LPL-EGR mechanism in a high-load engine operating region, thereby recirculating relatively cool exhaust gas for the reduction of smoke generated by heated intake air. To achieve this effect, the LPL-EGR mechanism is provided with an EGR cooler for the purpose of recirculating relatively cool exhaust gas.

The exhaust gas emission system of this kind of engine contains a NOx storage/reduction catalyst that stores (absorbs) NOx in exhaust gas, so that the NOx storage/reduction catalyst can purify the exhaust gas (see, for example, Patent Document 3 listed below).

Examples of NOx storage/reduction catalyst include NSR (NOx storage/reduction) catalysts and DPNR (diesel particulate-NOx reduction system) catalysts.

The NOx storage/reduction catalyst stores NOx in exhaust gas when the exhaust air/fuel ratio (exhaust A/F) is high (lean mixture), that is, when the exhaust gas emission system is rich in oxygen. On the other hand, when the exhaust air/fuel ratio is low (rich mixture), or more specifically, when the exhaust gas emission system is so lean in oxygen that the exhaust gas contains hydrocarbons (HC), carbon monoxide (CO), etc., the NOx storage/reduction catalyst reduces and releases stored NOx (NOx-reducing process is carried out). A specific, exemplary NOx-reducing process, disclosed in Patent Document 3, supplies fuel to the exhaust gas emission system (by post-injection or fuel addition) to lower the exhaust air/fuel ratio (reduce the oxygen concentration in the exhaust gas emission system, or create a rich mixture). That in turn reduces and purifies the NOx stored on the NOx storage/reduction catalyst through reaction with unburnt fuel components in the exhaust gas, hence recovering the NOx-storing capability of the NOx storage/reduction catalyst.

Citation List

Patent Literature

Patent Document 1: Japanese Patent Application Publication, Tokukai, No. 2001-207916
Patent Document 2: Japanese Patent Application Publication, Tokukai, No. 2011-89470
Patent Document 3: Japanese Patent Application Publication, Tokukai, No. 2009-85018
Patent Document 4: Japanese Patent Application Publication, Tokukai, No. 2006-150258

EP 2 241 731 A1 relates to a NOx absorbing device and exhaust purifying device.

EP 1 256 704 A2 relates to an exhaust gas purification system and method for internal combustion engine.

Summary of the Invention

Problems to Be Solved by the Invention

The NOx storage/reduction catalyst is composed of a base material made of an oxide (e.g., alumina $Al_2O_3$) with a noble metal (e.g., platinum Pt) as a catalytic component and a NOx-storing component (hereinafter, may be referred to as a "NOx-storing material") being carried on the surface of the base material. The NOx-storing material is selected from, for example, alkali metals (e.g., potassium K, sodium Na, and lithium Li), alkali earth metals (e.g., barium Ba and calcium Ca), and rare earth metals (e.g., lanthanum La, yttrium Y, and cerium Ce).

As disclosed in Patent Document 4, the NOx-storing material is generally a combination of a material that exhibits increased NOx-storing performance (an increased maximum possible NOx-storage level) when the catalyst temperature (catalyst floor temperature) is relatively low (hereinafter, a "low-temperature NOx-storing material") and a material that exhibits increased NOx-storing performance when the catalyst temperature is relatively high (hereinafter, a "high-temperature NOx-storing material"). The low-temperature NOx-storing material is, for example, cerium Ce. The high-temperature NOx-storing material is, for example, barium Ba.

In other words, it is primarily the low-temperature NOx-storing material that exhibits NOx-storing performance to store NOx when the catalyst temperature is relatively low (e.g., when the engine is operating under low load) and primarily the high-temperature NOx-storing material that exhibits NOx-storing performance to store NOx when the catalyst temperature is relatively high (e.g., when the engine is operating under high load). Hence, the NOx storage/reduction catalyst possesses NOx-storing capability across a wide range of temperatures.

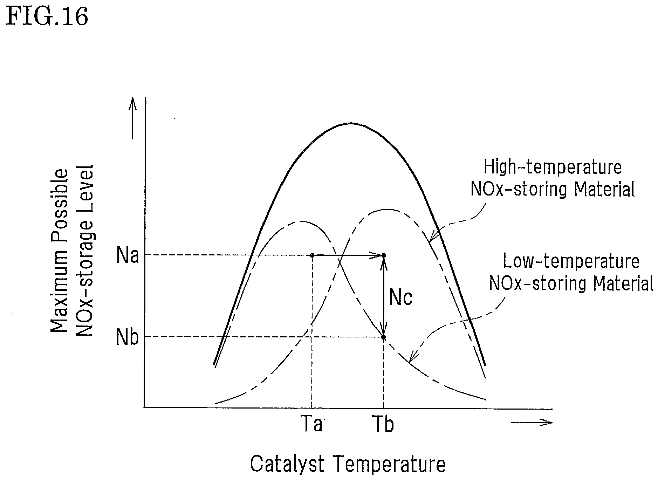

Figure 16 is a graphical representation of relationships between catalyst temperature and a maximum possible NOx-storage level, where the dash-dot line indicates a relationship between catalyst temperature and a maximum possible NOx-storage level for a low-temperature NOx-storing material, the dash-double-dot line indicates a relationship between catalyst temperature and a maximum possible NOx-storage level for a high-temperature NOx-storing material, and the solid line indicates a relationship between catalyst temperature and a maximum possible NOx-storage level for a NOx storage/reduction catalyst, or such a relationship that is obtainable from a combination of properties of these NOx-storing materials. Figure 16 demonstrates that the low-temperature NOx-storing material exhibits an increased maximum possible NOx-storage level at relatively low catalyst temperatures and also demonstrates that the high-temperature NOx-storing material exhibits an increased maximum possible NOx-storage level at relatively high catalyst temperatures.

If a NOx storage/reduction catalyst that, as described above, carries thereon a plurality of NOx-storing materials with different temperature characteristics changes its temperature quickly after the catalyst has stored NOx, the catalyst may release the NOx.

More specifically, such a phenomenon could occur, as an example, when the temperature of a low-temperature NOx-storing material rises quickly due to an increased engine load after the material has stored a relatively large amount of NOx at relatively low catalyst temperatures. As the catalyst temperature quickly rises, the low-temperature NOx-storing material reduces its maximum possible NOx-storage level, being no longer capable of maintaining its NOx storage and releasing NOx. The amount of NOx released by the NOx storage/reduction catalyst varies with the rise of catalyst temperature per unit time (temperature gradient) for the following reasons.

If the rise of catalyst temperature per unit time is relatively small, the low-temperature NOx-storing material releases a relatively small amount of NOx per unit time; the released NOx is stored by the high-temperature NOx-storing material. If the rise of catalyst temperature per unit time is relatively large, however, the low-temperature NOx-storing material releases a large amount of NOx per unit time; most of the released NOx is not stored by the high-temperature NOx-storing material, hence escaping from the NOx storage/reduction catalyst, due to the limited NOx-storing capability per unit time of the high-temperature NOx-storing material. For example, referring to Figure 16, if the catalyst temperature rises quickly to Tb from Ta at which the actual NOx-storage level is Na, the low-temperature NOx-storing material releases as much NOx as the difference between the maximum possible NOx-storage level Nb at the catalyst temperature Tb and the actual NOx-storage level Na. The difference is indicated by Nc in Figure 16. Most of it is the NOx released by the NOx storage/reduction catalyst.

This phenomenon of the NOx storage/reduction catalyst releasing NOx could occur not only when the temperature of a low-temperature NOx-storing material rises quickly after the material has stored NOx at relatively low catalyst temperatures as described above, but also when the temperature of a high-temperature NOx-storing material falls quickly after the material has stored NOx at relatively high catalyst temperatures.

If the LPL-EGR mechanism is operating to recirculate EGR gas while the NOx storage/reduction catalyst is releasing NOx as above, the released NOx, in an intercooler provided in an EGR cooler or intake air path of the LPL-EGR mechanism, may be dissolved in dew condensation water (dew water condensed from vapor as it is cooled in the cooler), forming an acid liquid. $NO_2$, in particular, has a high solubility. The NOx storage/reduction catalyst, if releasing a large amount of $NO_2$, may produce a highly concentrated acid liquid.

The acid liquid could negatively affect the EGR cooler and intercooler, which in turn would require the EGR cooler and intercooler to be made of material with high corrosion resistance.

In view of these problems, it is an object of the present invention to provide a control device, for an internal combustion engine, capable of reducing the amount of NOx released due to temperature change by the NOx storage/reduction catalyst.

Solution to Problem

The invention is defined in the appended claims.

Basis for Solution of the Invention

The basis for solution of the present invention on which to achieve the object involves predicting from catalyst temperature change whether NOx will be released for each NOx-storing material constituting a NOx storage/reduction catalyst, and if NOx is released by the NOx storage/reduction catalyst, carrying out a NOx-reducing process to reduce the amount of NOx released by the NOx storage/reduction catalyst.

Means to Solve Problems

Specifically, the present invention is conceived on an internal combustion engine with a control device, the internal combustion engine including an exhaust gas emission system housing a NOx storage/reduction catalyst containing a plurality of NOx-storing materials that have different, temperature-dependent NOx-storing properties, the internal combustion engine being capable of a NOx-reducing process to reduce NOx stored by the NOx storage/reduction catalyst by reducing an oxygen concentration in the exhaust gas emission system to achieve a rich exhaust air/fuel ratio. The plurality of NOx-storing materials including at least a high-temperature NOx-storing material that exhibits optimal NOx-storing performance at higher temperatures than does the other NOx-storing material and a low-temperature NOx-storing material that exhibits optimal NOx-storing performance at lower temperatures than does the other NOx-storing material. The internal combustion engine carries out the NOx-reducing process if the NOx storage/reduction catalyst, with the low-temperature NOx-storing material having stored NOx, heats up to above a predetermined temperature and exhibits a rising temperature gradient in excess of a predetermined value.

The language, "if the NOx storage/reduction catalyst, with the low-temperature NOx-storing material having stored NOx, heats up to above a predetermined temperature and exhibits a rising temperature gradient in excess of a predetermined value," here is a concept that encompasses "if the NOx storage/reduction catalyst, with the low-temperature NOx-storing material having stored NOx, is predicted to heat up to above a predetermined temperature and exhibit a rising temperature gradient in excess of a predetermined value."

The internal combustion engine carries out the NOx-reducing process if the NOx storage/reduction catalyst, with the high-temperature NOx-storing material having stored NOx, cools down to below a predetermined temperature and exhibits a falling temperature gradient in excess of a predetermined value.

The language, "if the NOx storage/reduction catalyst, with the high-temperature NOx-storing material having stored NOx, cools down to below a predetermined temperature and exhibits a falling temperature gradient in excess of a predetermined value," here is similarly a concept that encompasses "if the NOx storage/reduction catalyst, with the high-temperature NOx-storing material having stored NOx, is predicted to cool down to below a predetermined temperature and exhibit a falling temperature gradient in excess of a predetermined value."

The predetermined temperature for the NOx storage/reduction catalyst and the predetermined value for the rising temperature gradient that are used in formulating the conditions under which the NOx-reducing process is carried out are determined in advance through experiments or simulations, for example, according to the properties of the NOx-storing materials and the amounts of NOx stored in the NOx-storing materials.

The NOx-reducing process is carried out if, due to these specific technicalities, one of the NOx-storing materials releases NOx due to a change in temperature of the NOx storage/reduction catalyst and the other NOx-storing material cannot store most of the NOx released.

Specifically, if the NOx storage/reduction catalyst, with the low-temperature NOx-storing material having stored NOx, has a temperature that is not above a predetermined temperature or exhibits a rising temperature gradient that is not in excess of a predetermined value, it is judged either that the low-temperature NOx-storing material would not release NOx or that even if the low-temperature NOx-storing material releases NOx, most of the NOx released could be stored by the high-temperature NOx-storing material, and the NOx-reducing process is not carried out. On the other hand, if the NOx storage/reduction catalyst, with the low-temperature NOx-storing material having stored NOx, has a temperature that is above the predetermined temperature and exhibits a rising temperature gradient that is in excess of the predetermined value, it is judged that the low-temperature NOx-storing material would release NOx and most of the NOx released could not be stored by the high-temperature NOx-storing material, hence escaping from the NOx storage/reduction catalyst, and the NOx-reducing process is carried out.

Similarly, if the NOx storage/reduction catalyst, with the high-temperature NOx-storing material having stored NOx, has a temperature that is not below a predetermined temperature or exhibits a falling temperature gradient that is not in excess of a predetermined value, it is judged either that the high-temperature NOx-storing material would not release NOx or that even if the high-temperature NOx-storing material release NOx, most of the NOx released could be stored by the low-temperature NOx-storing material, and the NOx-reducing process is not carried out. On the other hand, if the NOx storage/reduction catalyst, with the high-temperature NOx-storing material having stored NOx, has a temperature that is below the predetermined temperature and exhibits a falling temperature gradient that is in excess of the predetermined value, it is judged that the high-temperature NOx-storing material would release NOx and most of the NOx released could not be stored by the low-temperature NOx-storing material, hence escaping from the NOx storage/reduction catalyst, and the NOx-reducing process is carried out.

This control reduces the amount of NOx released from the NOx storage/reduction catalyst due to temperature change. In addition, since the NOx-reducing process is carried out when the NOx storage/reduction catalyst releases NOx, no NOx-reducing process is carried out when the NOx storage/reduction catalyst is not releasing NOx; no unnecessary NOx-reducing process is carried out, which improves the fuel consumption ratio.

Especially, when this control is applied to an internal combustion engine including an EGR mechanism that recirculates to the intake air system the exhaust gas having passed through the NOx storage/reduction catalyst, acid liquid is prevented from being produced from the NOx released. That prevents the EGR mechanism and structural members (an EGR cooler, an intercooler, etc.) in the intake air system from negatively affected.

More specifically, the internal combustion engine includes an EGR mechanism that recirculates part, of exhaust gas, that has passed through the NOx storage/reduction catalyst to an intake air system, and the EGR mechanism does not recirculate exhaust gas if the NOx storage/reduction catalyst, with the low-temperature NOx-storing material having stored NOx, heats up to above a predetermined temperature, exhibits a rising temperature gradient in excess of a predetermined value, and while the internal combustion engine is operating in such a condition that the internal combustion engine is not capable of carrying out the NOx-reducing process, releases more than a predetermined amount of NOx.

Similarly, the internal combustion engine includes an EGR mechanism that recirculates part, of exhaust gas, that has passed through the NOx storage/reduction catalyst to an intake air system, and the EGR mechanism does not recirculate exhaust gas if the NOx storage/reduction catalyst, with the high-temperature NOx-storing material having stored NOx, cools down to below a predetermined temperature, exhibits a falling temperature gradient in excess of a predetermined value, and while the internal combustion engine is operating in such a condition that the internal combustion engine is not capable of carrying out the NOx-reducing process, releases more than a predetermined amount of NOx.

The amount of NOx released (predetermined amount) from the NOx storage/reduction catalyst according to which the EGR mechanism is prohibited from recirculating exhaust gas may be specified in a suitable manner. For example, the amount may be set to a value at which the EGR mechanism and the structural members (EGR cooler, intercooler, etc.) in the intake air system are prevented from being negatively affected.

This prohibition of the recirculation of exhaust gas when a relatively large amount of NOx is likely to flow into the EGR mechanism prevents acid liquid from being produced in the EGR mechanism and the intake air system, thereby reliably preventing the EGR mechanism and the structural members in the intake air system from being negatively affected.

When the EGR mechanism is prohibited from recirculating exhaust gas as described above, specifically, the control device subsequently carries out a control operation such that: the internal combustion engine carries out the NOx-reducing process when the low-temperature NOx-storing material has stored a predetermined threshold amount of NOx; and the control device changes the threshold amount to a lower value if the exhaust gas emission system emits not less than a predetermined amount of NOx while the EGR mechanism is prohibited from recirculating exhaust gas.

This control cancels out the amount of NOx emitted from the exhaust gas emission system due to the EGR mechanism being prevented from recirculating exhaust gas and the amount of NOx released due to the threshold amount being changed to a lower value, which in turn reduces adverse effects on the environment.

In this control, the control device restores the threshold amount to an original value when an amount of NOx released by the NOx storage/reduction catalyst decreases due to the threshold amount being changed to a lower value by substantially as much as an amount of NOx released by the exhaust gas emission system due to the EGR mechanism being prevented from recirculating exhaust gas.

This control reduces, to the shortest necessary duration, the period in which the NOx-reducing process is carried out at an increased frequency due to the threshold amount being changed to a lower value. That in turn prevents the NOx-reducing process from being carried out more frequently than needed, thereby improving the fuel consumption ratio.

Advantageous Effects of the Invention

The present invention prevents the amount of released NOx from increasing due to a change in temperature of a NOx storage/reduction catalyst.

Brief Description of Drawings

Figure 1 is a diagram schematically showing the structure of an engine in accordance with an embodiment.
Figure 2 is a block diagram showing the structure of a control system including an ECU.
Figure 3 is a graphical representation of a map to set up a mode on a MPL-EGR system while the engine is warm.
Figure 4 is a graphical representation of a map to set up a mode on a MPL-EGR system while the engine is cold.
Figure 5 is a graphical representation of relationships between catalyst temperature and a maximum possible NOx-storage level for a low-temperature NOx-storing material.
Figure 6 is a graphical representation of relationships between catalyst temperature and a maximum possible NOx-storage level for a high-temperature NOx-storing material.
Figure 7(a) is a graphical representation of relationships between a NOx-storing ratio and a NOx-storing rate for each NOx-storing material in a low catalyst temperature range, Figure 7(b) is a graphical representation of relationships between a NOx-storing ratio and a NOx-storing rate for each NOx-storing material in an intermediate catalyst temperature range, and Figure 7(c) is a graphical representation of relationships between a NOx-storing ratio and a NOx-storing rate for each NOx-storing material in a high catalyst temperature range.
Figure 8 is a flow chart depicting a part of released-NOx-amount control.
Figure 9 is a flow chart depicting the remaining part of the released-NOx-amount control.
Figure 10 is a graphical representation of exemplary changes of the inlet gas temperature of an NSR catalyst and the temperature of the NSR catalyst when the vehicle is accelerating.
Figure 11 is a graphical representation of a relationship between NOx concentration and the pH of condensed water.
Figure 12 is a graphical representation of a relationship between the amount of gas that passes through an NSR catalyst and NOx concentration.
Figure 13 is a graphical representation of an operation that changes a requested NOx reduction value for a low-temperature NOx-storing material in accordance with a variation example.
Figure 14 is a graphical representation of an operation that changes a requested NOx reduction value for a high-temperature NOx-storing material in accordance with a variation example.
Figure 15 is a graphical representation of an exemplary amount of NOx released in a normal condition and after NOx is released in accordance with a variation example.
Figure 16 is a graphical representation of relationships between the temperature of an NSR catalyst and a maximum possible NOx-storage level.

Description of Embodiments

The following will describe embodiments of the present invention in reference to drawings. The present embodiment will describe the present invention as it is applied to a common-rail intracylindrical-direct-injection multicylinder (e.g., inline four-cylinder) diesel engine (compression ignition combustion engine) mounted to an automobile. The present embodiment will also describe the present invention as it is applied to a diesel engine in which there is provided a MPL-EGR system including both a high-pressure EGR mechanism and a low-pressure EGR mechanism as an EGR system.

Engine Structure

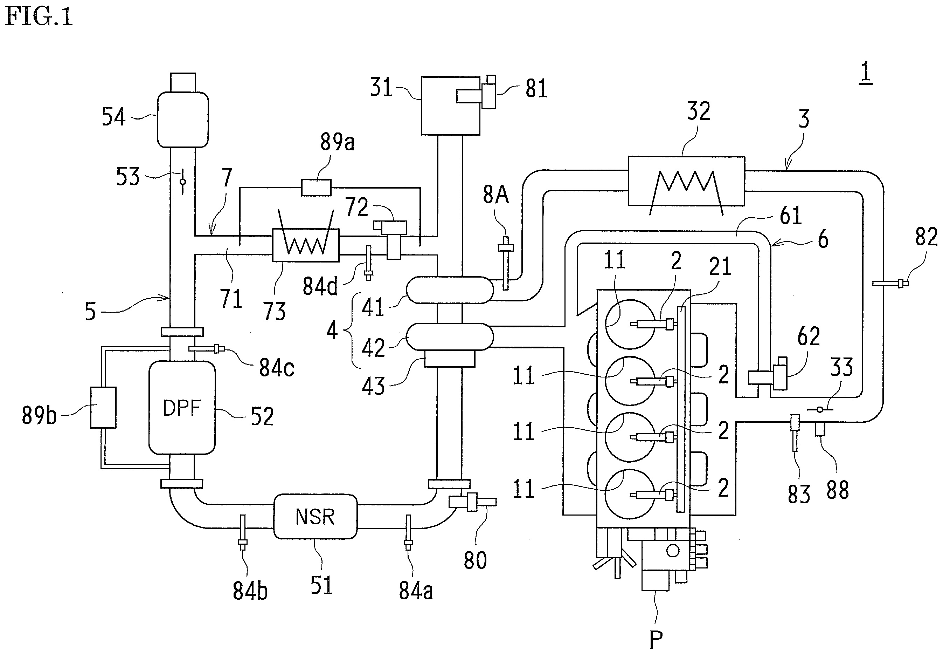

Figure 1 is a diagram schematically showing the structure of an engine (internal combustion engine) 1 in accordance with the present embodiment. The engine 1, shown in Figure 1, is a diesel engine with four cylinders 11. Each cylinder 11 has an injector (fuel injection valve) 2 capable of direct fuel injection into the cylinder 11. The injector 2 is composed of a piezoinjector that includes therein, for example, a piezoelectric element (piezoelement) to inject fuel into the cylinder 11 by opening the valve at an appropriate timing. The injector 2 is fed with fuel under high pressure by a high pressure fuel pump P via a common rail 21.

The cylinders 11 are connected to an intake air path 3 constituting an intake air system. An air cleaner 31 is disposed upstream of the intake air path 3. Along the intake air path 3 are there provided a compressor 41 for a turbocharger (centrifugal supercharger) 4, an intercooler 32, and an intake air throttle (diesel throttle) 33 in this order in the direction of the intake air flow. The intake air introduced into the intake air path 3 is purified by the air cleaner 31 before being supercharged by the compressor 41 and cooled down by the intercooler 32. Thereafter, the intake air is passed through the intake air throttle 33 and introduced to the cylinders 11. The intake air directed into each cylinder 11 is compressed in a compression step and mixed with a fuel injected into the cylinder 11 from the injector 2 for combustion of the fuel. As a result of the combustion of the fuel, a piston (not shown) in each cylinder 11 reciprocates in the cylinder 11 and rotates a crankshaft via a connecting rod to generate an engine output.

The intake air throttle 33 is fully opened in a normal operation and closed to a predetermined opening degree as needed, for example, during vehicle deceleration (e.g., when there is a need to prevent an NSR catalyst 51 from cooling down as detailed below).

The cylinders 11 are connected to an exhaust air path 5 constituting an exhaust gas emission system. Along the exhaust air path 5 is there provided a turbine 42 for the turbocharger 4.

The turbocharger 4 in accordance with the present embodiment is a nozzle-variable turbocharger and includes a variable nozzle vane mechanism 43 close to the turbine 42. The supercharging pressure for the engine 1 can be regulated by adjusting the opening degree of the nozzle vane (not shown) in the variable nozzle vane mechanism 43. Specifically, the supercharging pressure of the compressor 41 is increased by decreasing the opening degree of the nozzle vane; conversely, the supercharging pressure of the compressor 41 is decreased by increasing the opening degree of the nozzle vane. The variable nozzle vane mechanism 43 has a well-known structure (see, for example, Japanese Patent Application Publication, Tokukai, No. 2011-127561 and Japanese Patent Application Publication, Tokukai, No. 2012-7544), and its description is omitted.

Along the exhaust air path 5, downstream of the turbine 42, are there provided the NSR catalyst (NOx storage/reduction catalyst) 51, a DPF (diesel particulate filter; exhaust gas purification filter) 52, an exhaust throttle 53, and a silencer 54 in this order in the direction of the exhaust gas flow.

The exhaust gas (burnt gas) produced by the combustion in the cylinders 11 is emitted to the exhaust air path 5. The exhaust gas emitted to the exhaust air path 5 goes through the turbine 42 disposed on the exhaust air path 5 before being purified by the NSR catalyst 51 and the DPF 52, passed through the exhaust throttle 53 and the silencer 54, and discharged into the air.

A specific exhaust gas purification technique may involve the NSR catalyst 51 storing NOx if the exhaust gas is rich in oxygen and reducing NOx to $NO_2$ or NO before releasing it if the exhaust gas is lean in oxygen and reducing components (e.g., unburnt components (HC) of fuel) are present in large amounts. The NOx released in the form of $NO_2$ and NO swiftly reacts with HC and CO in the exhaust gas to be further reduced to $N_2$. By reducing the $NO_2$ and NO, the HC and CO are oxidized to produce $H_2O$ and $CO_2$. In other words, the HC, CO, and NOx in the exhaust gas can be purified by suitably adjusting the oxygen concentration and HC components in the exhaust gas introduced to the NSR catalyst 51. In the present embodiment, the oxygen concentration and HC components in the exhaust gas can be adjusted by controlling the fuel injection (post-injection) by the injectors 2 and the opening degree of the intake air throttle 33.

Now, the composition of the NSR catalyst 51 will be described. The NSR catalyst 51 is composed of a base material made of an oxide (e.g., alumina $Al_2O_3$) with a noble metal (e.g., platinum Pt) as a catalytic component and a NOx-storing material being carried on the surface of the base material. The NOx-storing material is a combination of two or more elements selected from, for example, alkali metals (e.g., potassium K, sodium Na, and lithium Li), alkali earth metals (e.g., barium Ba and calcium Ca), and rare earth metals (e.g., lanthanum La, yttrium Y, and cerium Ce). The NOx-storing material being carried is a combination of a low-temperature NOx-storing material that exhibits optimal NOx-storing performance (increased maximum possible NOx-storage level) when the catalyst temperature (catalyst floor temperature) is relatively low (e.g., 200°C) (that exhibits optimal NOx-storing performance at lower catalyst temperatures than does the other NOx-storing material (high-temperature NOx-storing material (detailed later)) and a high-temperature NOx-storing material that exhibits optimal NOx-storing performance when the catalyst temperature is relatively high (e.g., 400°C) (that exhibits optimal NOx-storing performance at higher temperatures than does the other NOx-storing material (the low-temperature NOx-storing material)). The NSR catalyst 51 in accordance with the present embodiment contains, for example, cerium Ce and barium Ba as the low-temperature NOx-storing material and the high-temperature NOx-storing material respectively. This is not the only possible combination of a low-temperature NOx-storing material and a high-temperature NOx-storing material; any suitable combination may be selected.

The NSR catalyst 51 contains a plurality of NOx-storing materials that have different, temperature-dependent NOx-storing properties as detailed above. It is primarily the low-temperature NOx-storing material that exhibits NOx-storing performance to store NOx when the catalyst temperature is relatively low (e.g., when the engine 1 is operating under low load) and primarily the high-temperature NOx-storing material that exhibits NOx-storing performance to store NOx when the catalyst temperature is relatively high (e.g., when the engine 1 is operating under high load). Hence, the NSR catalyst 51 possesses NOx-storing capability across a wide range of temperatures.

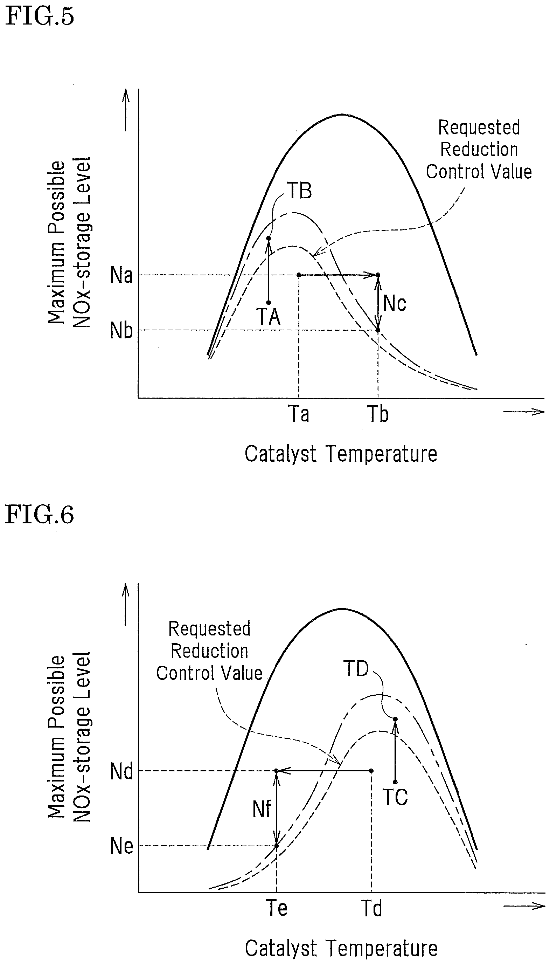

Figure 5 is a graphical representation of relationships between catalyst temperature and a maximum possible NOx-storage level for a low-temperature NOx-storing material, where the dash-dot line indicates a relationship between catalyst temperature and a maximum possible NOx-storage level for a low-temperature NOx-storing material, the solid line indicates a relationship between catalyst temperature and a maximum possible NOx-storage level for the NSR catalyst 51, or such a relationship that is obtainable from a combination of properties of the high- and low-temperature NOx-storing materials, and the broken line indicates a requested reduction control value for the low-temperature NOx-storing material. A requested reduction control value is a threshold NOx-storage level according to which it is determined that NOx reduction control (hereinafter, may be referred to as a "NOx-reducing process") needs to be started when the low-temperature NOx-storing material is to accumulatively store NOx. In other words, if the low-temperature NOx-storing material is to accumulatively store NOx until the NOx-storage level reaches the requested reduction control value, NOx reduction control is started to reduce and release the NOx stored in the low-temperature NOx-storing material. In addition, in the present embodiment, if although the NOx-storage level does not change, the catalyst temperature rises to a temperature at which the current NOx-storage level is in excess of the requested reduction control value (for the low-temperature NOx-storing material), NOx reduction control is started to reduce the NOx stored in the low-temperature NOx-storing material on the condition that the NOx released by the low-temperature NOx-storing material escapes from the NSR catalyst 51. Details will be given later.

In contrast, Figure 6 is a graphical representation of relationships between catalyst temperature and a maximum possible NOx-storage level for a high-temperature NOx-storing material, where the dash-double-dot line indicates a relationship between catalyst temperature and a maximum possible NOx-storage level for a high-temperature NOx-storing material, the solid line indicates a relationship between catalyst temperature and a maximum possible NOx-storage level for the NSR catalyst 51, or such a relationship that is obtainable from a combination of properties of the high- and low-temperature NOx-storing materials, and the broken line indicates a requested reduction control value for the high-temperature NOx-storing material. A requested reduction control value is, similarly to the one described above, a threshold NOx-storage level according to which it is determined that NOx reduction control needs to be started when the high-temperature NOx-storing material is to accumulatively store NOx. In other words, if the high-temperature NOx-storing material is to accumulatively store NOx until the NOx-storage level reaches the requested reduction control value, NOx reduction control is started to reduce and release the NOx stored in the high-temperature NOx-storing material. In addition, in the present embodiment, if although the NOx-storage level does not change, the catalyst temperature falls to a temperature at which the current NOx-storage level is in excess of the requested reduction control value (for the high-temperature NOx-storing material), NOx reduction control is started to reduce the NOx stored in the high-temperature NOx-storing material on the condition that the NOx released by the high-temperature NOx-storing material escapes from the NSR catalyst 51. Details will be given later.

Each of these low- and high-temperature NOx-storing materials has a NOx-storing rate that changes with a NOx-storing ratio. The NOx-storing ratio of a NOx-storing material is the ratio of an amount of NOx that is actually stored in that material to a maximum amount of NOx that can be stored in the material (= actual NOx-storage level / maximum possible NOx-storage level). The NOx-storing rate of a NOx-storing material is the amount of NOx that can be newly stored per unit time.

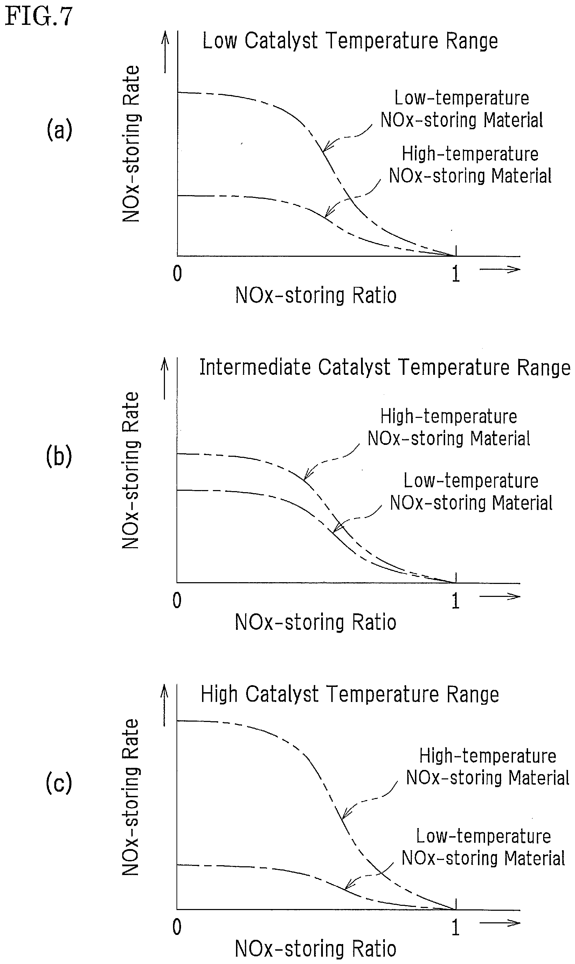

Figure 7(a) is a graphical representation of relationships between a NOx-storing ratio and a NOx-storing rate for each NOx-storing material in a low catalyst temperature range (e.g., 200°C). As illustrated in Figure 7(a), in the low catalyst temperature range, the low-temperature NOx-storing material (indicated by a dash-dot line in Figure 7(a)) has higher NOx-storing performance than the high-temperature NOx-storing material (indicated by a dash-double-dot line in Figure 7(a)) and has a higher NOx-storing rate for the same NOx-storing ratio. Both NOx-storing materials have a NOx-storing rate that increases with a decrease in the NOx-storing ratio.

Figure 7(b) is a graphical representation of relationships between a NOx-storing ratio and a NOx-storing rate for each NOx-storing material in an intermediate catalyst temperature range (e.g., 300°C). As illustrated in Figure 7(b), in the intermediate catalyst temperature range, the NOx-storing materials have substantially the same NOx-storing performance, hence substantially equal NOx-storing rates. Both NOx-storing materials have a NOx-storing rate that increases with a decrease in the NOx-storing ratio.

Figure 7(c) is a graphical representation of relationships between a NOx-storing ratio and a NOx-storing rate for each NOx-storing material in a high catalyst temperature range (e.g., 400°C). As illustrated in Figure 7(c), in the high catalyst temperature range, the high-temperature NOx-storing material has higher NOx-storing performance than the low-temperature NOx-storing material and has a higher NOx-storing rate for the same NOx-storing ratio. Both NOx-storing materials have a NOx-storing rate that increases with a decrease in the NOx-storing ratio.

The DPF 52, disposed downstream of the NSR catalyst 51, is made of, for example, a porous ceramic structural body to collect PM (particulate matter) contained in exhaust gas as it passes through porous walls. The DPF 52 carries a catalyst (oxidizing catalyst composed primarily of platinum or a like noble metal) that oxidizes and combusts the collected PM during DPF restoration.

EGR System

The engine 1 in accordance with the present embodiment is provided with a MPL-EGR system including a HPL-EGR mechanism (high-pressure EGR mechanism) 6 and a LPL-EGR mechanism (low-pressure EGR mechanism) 7.

The HPL-EGR mechanism 6 includes a high-pressure EGR path 61 and a high-pressure EGR valve 62. The high-pressure EGR path 61 directs part of exhaust gas (high-pressure EGR gas) from the exhaust air path 5 (e.g., exhaust manifold) located upstream of the turbine 42 for the turbocharger 4 to the intake air path 3 located downstream of the compressor 41 (downstream of the intake air throttle 33). The high-pressure EGR valve 62 renders the channel area of the high-pressure EGR path 61 variable.

The amount of the high-pressure EGR gas recirculated by the HPL-EGR mechanism 6 is adjusted through the opening degree of the high-pressure EGR valve 62. The opening degree of the intake air throttle 33 may be decreased (or its closing degree may be increased) when necessary, which increases the amount of the high-pressure EGR gas that is recirculated.

The LPL-EGR mechanism 7 includes a low-pressure EGR path 71, a low-pressure EGR valve 72, and a low-pressure EGR cooler 73. The low-pressure EGR path 71 directs part of exhaust gas (low-pressure EGR gas) from a part of the exhaust air path 5 located downstream of the DPF 52 and upstream of the exhaust throttle 53 to a part of the intake air path 3 located upstream of the compressor 41. The low-pressure EGR valve 72 renders the channel area of the low-pressure EGR path 71 variable. The low-pressure EGR cooler 73 cools down the low-pressure EGR gas that flows in the low-pressure EGR path 71.

The amount of the low-pressure EGR gas recirculated by the LPL-EGR mechanism 7 is adjusted through the opening degree of the low-pressure EGR valve 72. The opening degree of the exhaust throttle 53 may be decreased when necessary, which increases the amount of the low-pressure EGR gas that is recirculated.

Control System

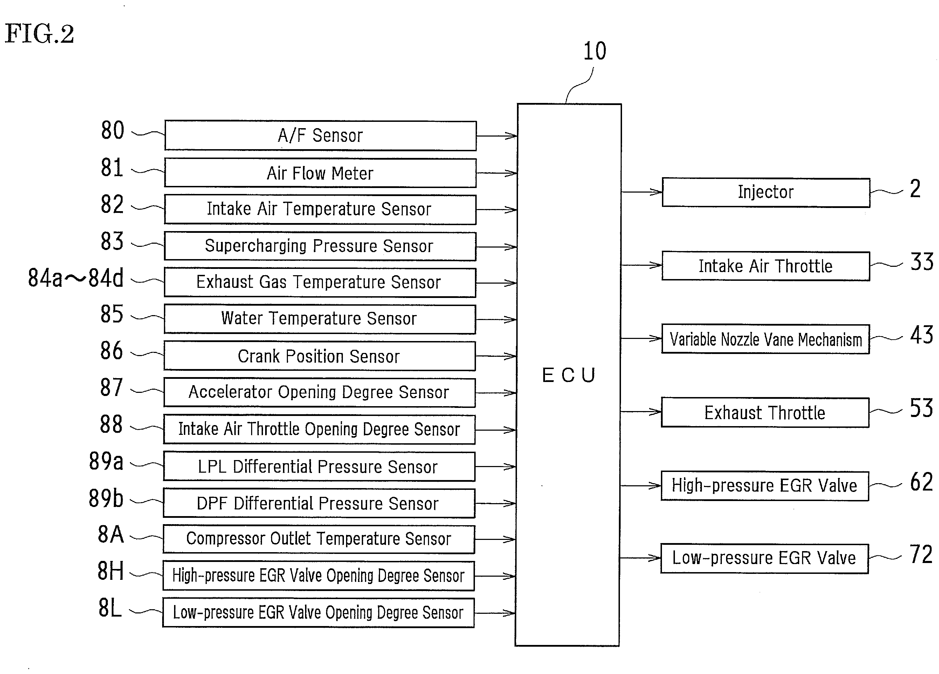

As illustrated in Figure 2, the injector 2, intake air throttle 33, variable nozzle vane mechanism 43, exhaust throttle 53, high-pressure EGR valve 62, and low-pressure EGR valve 72 are electrically connected to an ECU (electronic control unit) 10.

The ECU 10 is electrically connected to various sensors, including an A/F sensor 80, an air flow meter 81, an intake air temperature sensor 82, a supercharging pressure sensor 83, exhaust gas temperature sensors 84a to 84d, a water temperature sensor 85, a crank position sensor 86, an accelerator opening degree sensor 87, an intake air throttle opening degree sensor 88, a LPL differential pressure sensor 89a, a DPF differential pressure sensor 89b, a compressor outlet temperature sensor 8A, a high-pressure EGR valve opening degree sensor 8H, and a low-pressure EGR valve opening degree sensor 8L.

The A/F sensor 80 detects the oxygen concentration in exhaust gas at the upstream of the NSR catalyst 51 and downstream of the turbine 42 and outputs a detection signal that continuously changes with the oxygen concentration. The air flow meter 81 measures the amount of air that flows from the outside to the intake air path 3 (amount of fresh air). The intake air temperature sensor 82 detects the temperature of the air flow in the intake air path 3 (specifically, temperature of the air flow in a part of the intake air path 3 located downstream of the intercooler 32 and upstream of the intake air throttle 33). The supercharging pressure sensor 83 detects the pressure of intake air at the downstream of the intake air throttle 33 (pressure of intake air supercharged by the turbocharger 4). The exhaust gas temperature sensors 84a to 84d are disposed respectively at the upstream of the NSR catalyst 51, the downstream of the NSR catalyst 51, the downstream of the DPF 52, and the downstream of the low-pressure EGR cooler 73 on the low-pressure EGR path 71 (the upstream of the low-pressure EGR valve 72) to detect the temperature of exhaust gas at those different places. The water temperature sensor 85 detects the temperature of the cooling water circulating inside the engine 1. The crank position sensor 86 detects the rotational position of the crankshaft of the engine 1. The accelerator opening degree sensor 87 detects the amount by which the accelerator pedal is pressed down by the driver (accelerator opening degree). The intake air throttle opening degree sensor 88 detects the opening degree of the intake air throttle 33. The LPL differential pressure sensor 89a measures a difference between the pressure upstream of the low-pressure EGR cooler 73 in the LPL-EGR mechanism 7 and the pressure downstream thereof. The DPF differential pressure sensor 89b measures a difference between the pressure upstream of the DPF 52 and the pressure downstream thereof and is used to estimate the amount of PM that has been deposited on the DPF 52. The compressor outlet temperature sensor 8A detects the temperature of the intake air that flows out of the compressor 41 (a gaseous mixture of supercharged fresh air and a low-pressure EGR gas). The high-pressure EGR valve opening degree sensor 8H detects the opening degree of the high-pressure EGR valve 62. The low-pressure EGR valve opening degree sensor 8L detects the opening degree of the low-pressure EGR valve 72.

The ECU 10 controls the injector 2, intake air throttle 33, variable nozzle vane mechanism 43, exhaust throttle 53, high-pressure EGR valve 62, and low-pressure EGR valve 72 based on the detections and measurements made by the sensors 80 to 89a, 89b, 8A, 8H, and 8L.

For example, the ECU 10 controls the HPL-EGR mechanism 6 and the LPL-EGR mechanism 7 according to the operating condition of the engine 1 (e.g., engine load).

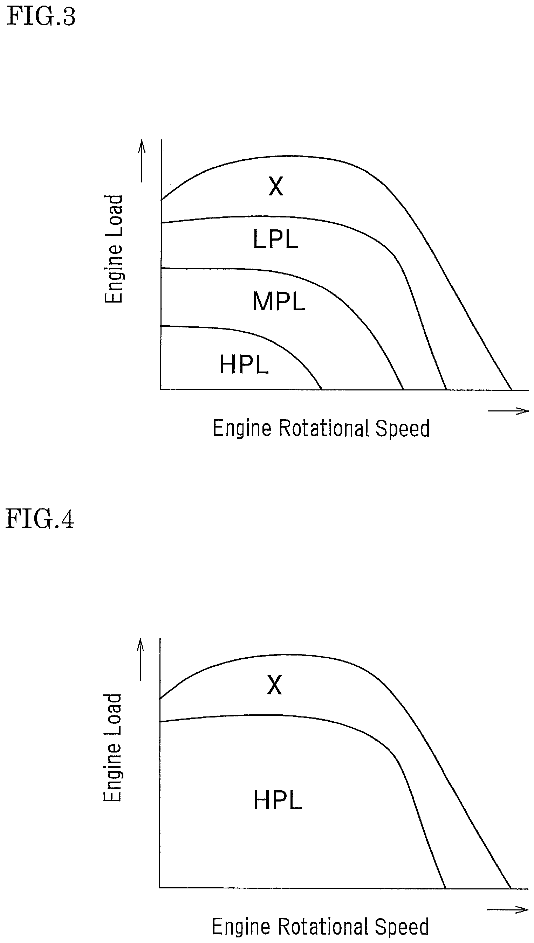

Specifically, when the engine 1 is warm (e.g., when the temperature of the cooling water is 80°C or higher), the ECU 10 selectively uses the EGR mechanisms 6 and 7 according to the map in Figure 3: if the engine 1 is operating under low load, the ECU 10 recirculates exhaust gas by using the HPL-EGR mechanism 6 (recirculation in a high-pressure EGR region); if the engine 1 is operating under high load, the ECU 10 recirculates exhaust gas by using the LPL-EGR mechanism 7 (recirculation in a low-pressure EGR region); and if the engine 1 is operating under intermediate load, the ECU 10 recirculates exhaust gas by using the HPL-EGR mechanism 6 and the LPL-EGR mechanism 7 together (recirculation in a MPL region). This control will be specifically described later. In the region X in Figure 3, the high-pressure EGR valve 62 of the HPL-EGR mechanism 6 and the low-pressure EGR valve 72 of the LPL-EGR mechanism 7 are both closed, hence, no EGR gas is recirculated. This operating region X is intended for use when the exhaust gas contains much smoke or when there is a need for high system reliability, such as restrictions on EGR gas temperature.

Either the HPL-EGR mechanism 6 or the LPL-EGR mechanism 7, or both, are selectively used as above according to the operating condition of the engine 1. That enables recirculation of a suitable amount of EGR gas across various operating regions of the engine 1, which in turn decreases the NOx concentration in the exhaust gas in a desirable manner.

When the engine 1 is cold, the ECU 10, in all the operating regions except for the region X, recirculates exhaust gas by using the HPL-EGR mechanism 6, regardless of the load on the engine 1, as shown in the map in Figure 4. This is intended to recirculate exhaust gas of relatively high temperature by using the HPL-EGR mechanism 6, which has no EGR cooler, to quickly warm up the engine 1 or activate the NSR catalyst 51.

Basic Control of MPL-EGR System

Next, the basic control of the MPL-EGR system will be described.

First will be described the control of the amount of EGR gas by the HPL-EGR mechanism 6 and the control of the amount of EGR gas by the LPL-EGR mechanism 7, which are carried out in a mutually independent manner.

When the HPL-EGR mechanism 6 is used (either alone or together with the LPL-EGR mechanism 7) to recirculate EGR gas, a target amount of recirculated EGR gas (hereinafter, "target high-pressure EGR gas recirculation amount") and an estimated amount of recirculated EGR gas (hereinafter, "estimated high-pressure EGR gas recirculation amount") are compared. The opening degree of the high-pressure EGR valve 62 and the opening degree of the intake air throttle 33 are feedback-controlled (hereinafter, "EGR feedback-control") so that the estimated high-pressure EGR gas recirculation amount can approach the target high-pressure EGR gas recirculation amount. The target high-pressure EGR gas recirculation amount here is specified according to the operating condition (especially, engine load) of the engine 1. The estimated high-pressure EGR gas recirculation amount is obtained from a predetermined computation formula or map that is pre-recorded in a ROM (read only memory) for the ECU 10. The computation formula or map contains parameters, such as the opening degree of the high-pressure EGR valve 62 detected by the high-pressure EGR valve opening degree sensor 8H, the temperature of intake air detected by the intake air temperature sensor 82, and the differential pressure (difference between intake air pressure detected by the supercharging pressure sensor 83 and pressure inside the exhaust manifold). The pressure inside the exhaust manifold is obtained from a predetermined computation formula or map that is pre-recorded in the ROM for the ECU 10, using the intake air pressure and an amount indicating an operating condition of the engine 1, etc. as parameters.

On the other hand, when the LPL-EGR mechanism 7 is used (either alone or together with the HPL-EGR mechanism 6) to recirculate EGR gas, a target amount of recirculated EGR gas (hereinafter, "target low-pressure EGR gas recirculation amount") and an estimated amount of recirculated EGR gas (hereinafter, "estimated low-pressure EGR gas recirculation amount") are compared. The opening degree of the low-pressure EGR valve 72 and the opening degree of the exhaust throttle 53 are feedback-controlled (EGR feedback-control) so that the estimated low-pressure EGR gas recirculation amount can approach the target low-pressure EGR gas recirculation amount. The target low-pressure EGR gas recirculation amount here is specified according to the operating condition (especially, engine load) of the engine 1. The estimated low-pressure EGR gas recirculation amount is obtained from a predetermined computation formula or map that is pre-recorded in the ROM for the ECU 10. The computation formula or map contains parameters, such as the opening degree of the low-pressure EGR valve 72 detected by the low-pressure EGR valve opening degree sensor 8L, the temperature of exhaust gas detected by the exhaust gas temperature sensors 84a to 84d, and the differential pressure (difference between the pressure upstream of the low-pressure EGR cooler 73 and the pressure downstream thereof) detected by the LPL differential pressure sensor 89a.

The following will describe the basic operations of the MPL-EGR system (basic operations of the HPL-EGR mechanism 6 and the LPL-EGR mechanism 7) carried out in response to the load on the engine 1.

When Operating under Low Load

As described above, when the engine load is relatively low (when the engine 1 is operating in the low load region), only the HPL-EGR mechanism 6 is used to recirculate EGR gas. This operating region is termed a HPL region. It is also only the HPL-EGR mechanism 6 that is used to recirculate EGR gas when the cooling water temperature is low.
This EGR feedback-control in the HPL region involves specifying the target high-pressure EGR gas recirculation amount so that the amount of intake air detected by the air flow meter 81 matches the target amount of intake air specified according to, for example, an engine load and an engine rotational speed. The EGR feedback-control in the HPL region further involves, as described above, feedback-controlling the opening degree of the high-pressure EGR valve 62 so that the estimated high-pressure EGR gas recirculation amount matches the target high-pressure EGR gas recirculation amount. The low-pressure EGR valve 72 is maintained fully closed during the EGR feedback-control.
For example, when the amount of intake air detected by the air flow meter 81 is less than the target value, and the actual EGR ratio is more than the target EGR ratio (which is determined, for example, according to the operating condition of the engine 1), the estimated high-pressure EGR gas recirculation amount is higher than the target high-pressure EGR gas recirculation amount. The opening degree of the high-pressure EGR valve 62 is therefore decreased to reduce the amount of EGR gas.
In contrast, when the amount of intake air detected by the air flow meter 81 is more than the target value, and the actual EGR ratio is less than the target EGR ratio, the estimated high-pressure EGR gas recirculation amount is lower than the target high-pressure EGR gas recirculation amount. The opening degree of the high-pressure EGR valve 62 is therefore increased to increase the amount of EGR gas. If this increased opening degree of the high-pressure EGR valve 62 still does not enable the estimated high-pressure EGR gas recirculation amount to reach the target high-pressure EGR gas recirculation amount, the pressure downstream of the intake air throttle 33 is reduced by decreasing the opening degree of the intake air throttle 33 (or by increasing its closing degree), in order to increase the amount of the EGR gas that is recirculated via the high-pressure EGR path 61. The actual EGR ratio hence approaches the target EGR ratio.

When Operating under High Load

As described above, when the engine load is relatively high (when the engine 1 is operating in the high load region), only the LPL-EGR mechanism 7 is used to recirculate EGR gas. This operating region is termed a LPL region.
This EGR feedback-control in the LPL region involves specifying the target low-pressure EGR gas recirculation amount so that the amount of intake air detected by the air flow meter 81 matches the target amount of intake air specified according to, for example, an engine load and an engine rotational speed. The EGR feedback-control in the LPL region further involves, as described above, feedback-controlling the opening degree of the low-pressure EGR valve 72 so that the estimated low-pressure EGR gas recirculation amount matches the target low-pressure EGR gas recirculation amount. The high-pressure EGR valve 62 is basically (unless there is an insufficient amount of EGR gas) maintained fully closed during the EGR feedback-control.
For example, when the amount of intake air detected by the air flow meter 81 is less than the target value, and the actual EGR ratio is more than the target EGR ratio, the estimated low-pressure EGR gas recirculation amount is higher than the target low-pressure EGR gas recirculation amount. The opening degree of the low-pressure EGR valve 72 is therefore decreased to reduce the amount of EGR gas.
In contrast, when the amount of intake air detected by the air flow meter 81 is more than the target value, and the actual EGR ratio is less than the target EGR ratio, the estimated low-pressure EGR gas recirculation amount is lower than the target low-pressure EGR gas recirculation amount. The opening degree of the low-pressure EGR valve 72 is therefore increased to increase the amount of EGR gas. If this increased opening degree of the low-pressure EGR valve 72 still does not enable the estimated low-pressure EGR gas recirculation amount to reach the target low-pressure EGR gas recirculation amount, either the opening degree of the high-pressure EGR valve 62 is increased or the opening degree of the exhaust throttle 53 is decreased (or its closing degree is increased), in order to increase the amount of the EGR gas that is recirculated via the low-pressure EGR path 71. The actual EGR ratio hence approaches the target EGR ratio.

When Operating under Intermediate Load

As described above when the engine load is intermediate (when the engine 1 is operating in the intermediate load region), both the HPL-EGR mechanism 6 and the LPL-EGR mechanism 7 are used together to recirculate EGR gas. This region between the HPL region and the LPL region is termed a MPL region.
This EGR feedback-control in the MPL region involves determining a target amount of intake air and a target EGR ratio (= High-pressure EGR Gas Recirculation Amount + Low-pressure EGR Gas Recirculation Amount / High-pressure EGR Gas Recirculation Amount + Low-pressure EGR Gas Recirculation Amount + Amount of Intake Air) according to, for example, an engine load and an engine rotational speed, as well as specifying the total amount of EGR gas from these values. The EGR feedback-control further involves determining an EGR distribution ratio (ratio of the amount of high-pressure EGR gas recirculated by the HPL-EGR mechanism 6 and the amount of low-pressure EGR gas recirculated by the LPL-EGR mechanism 7) according to, for example, the engine load. The EGR feedback-control further involves multiplying the distribution ratio of the high-pressure EGR gas (= High-pressure EGR Gas Recirculation Amount / High-pressure EGR Gas Recirculation Amount + Low-pressure EGR Gas Recirculation Amount) by the total amount of EGR gas and the distribution ratio of the low-pressure EGR gas (= Low-pressure EGR Gas Recirculation Amount / High-pressure EGR Gas Recirculation Amount + Low-pressure EGR Gas Recirculation Amount) by the total amount of EGR gas, to obtain a target amount of the high-pressure EGR gas (target high-pressure EGR gas recirculation amount) and a target amount of the low-pressure EGR gas (target low-pressure EGR gas recirculation amount) respectively.

The HPL-EGR mechanism 6 is controlled to change the opening degree of the high-pressure EGR valve 62 so that the estimated high-pressure EGR gas recirculation amount can reach the target high-pressure EGR gas recirculation amount. The opening degree of the high-pressure EGR valve 62 is controlled here in the same manner as it is controlled when the engine 1 is operating under low load as described above.

Meanwhile, the LPL-EGR mechanism 7 is controlled to change the opening degree of the low-pressure EGR valve 72 so that the estimated low-pressure EGR gas recirculation amount can reach the target low-pressure EGR gas recirculation amount. The opening degree of the low-pressure EGR valve 72 is controlled here in the same manner as it is controlled when the engine 1 is operating under high load as described above.

NOx-reducing Process

Next, the NOx-reducing process will be described.

In the diesel engine 1, the oxygen concentration in a fuel/air gaseous mixture that is combusted in the combustion chamber is generally high in almost all operating regions. The oxygen concentration in the gaseous mixture to be combusted, minus the oxygen consumed in the combustion, typically coincides with the oxygen concentration in the exhaust gas. If the gaseous mixture has a high oxygen concentration (air/fuel ratio, combustion A/F), the exhaust gas basically has a similarly high oxygen concentration (air/fuel ratio, exhaust A/F). Meanwhile, as mentioned earlier, the NSR catalyst 51 stores NOx when the exhaust gas has a high oxygen concentration and reduces NOx to $NO_2$ or NO and releases the $NO_2$ or NO when the exhaust gas has a low oxygen concentration. The NSR catalyst 51 continuously stores NOx so long as the exhaust gas has a high oxygen concentration. The actual NOx-storage level of the NSR catalyst 51 however has a limit; when the NSR catalyst 51 has stored this limit amount of NOx, the NOx in the exhaust gas passes unchanged through the catalyst casing without being stored by the NSR catalyst 51.

Accordingly, when the NOx-storage level of the NSR catalyst 51 has reached a predetermined value, the injector 2 carries out post-injection under the control of the ECU 10. This temporarily lowers the oxygen concentration in the exhaust gas and increases the amounts of reducing components (e.g., HC). Hence, the NSR catalyst 51 reduces and releases the NOx that it has stored, thereby recovering its NOx-storing capability. The detailed conditions under which the NOx-reducing process is carried out will be described later.

The amount of the NOx stored on the NSR catalyst 51 is estimated by finding out a total amount of generated NOx from history information related to the engine rotational speed and the fuel injection amount for each cylinder. If the estimated amount of NOx exceeds a predetermined value (requested reduction control value described above, or an appropriate value that is less than a value at which the NOx-storing capability of the NSR catalyst 51 reaches a saturation point), the NOx-reducing process is carried out by post-injection as above, thereby recovering the NOx-storing capability of the NSR catalyst 51 as described above.

Released-NOx-amount Control

Next, released-NOx-amount control will be described, which is a feature of the present embodiment.

If the NSR catalyst 51 that, as described above, carries thereon a plurality of NOx-storing materials with different temperature characteristics changes its temperature quickly after the NSR catalyst 51 has stored NOx, either the low-temperature NOx-storing material or the high-temperature NOx-storing material could release the NOx stored therein. The released NOx may escape from the NSR catalyst 51.

Such a phenomenon could occur, as an example, when the temperature of a low-temperature NOx-storing material rises quickly due to an increased engine load after the material has stored a relatively large amount of NOx at relatively low catalyst temperatures. As the catalyst temperature quickly rises, the low-temperature NOx-storing material reduces its maximum possible NOx-storage level, being no longer capable of maintaining its NOx storage and releasing it.

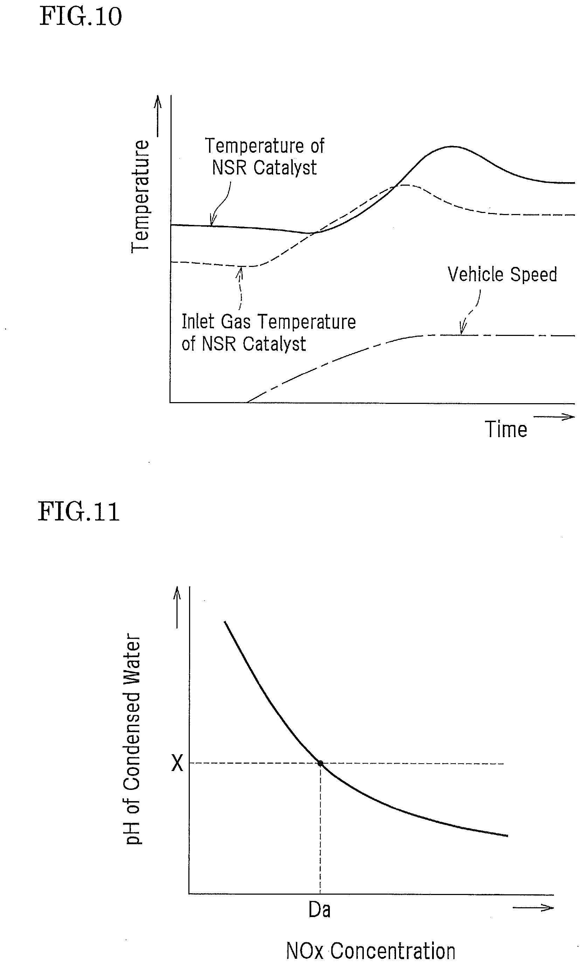

Figure 10 is a graphical representation of changes of the vehicle speed (dash-dot line), the inlet gas temperature of the NSR catalyst 51 (broken line), the temperature of the NSR catalyst 51 (solid line) when the engine shifts to high-load operation. As illustrated in Figure 10, when the engine has shifted to high-load operation, the inlet gas temperature of the NSR catalyst 51 increases with an increase in the amount of heat generated inside the combustion chamber. With a short time delay from the increase in the inlet gas temperature of the NSR catalyst 51, the temperature of the NSR catalyst 51 also increases. This time delay is attributed to, for example, the thermal capacity of the NSR catalyst 51.

The amount of NOx released from the NSR catalyst 51 varies with the rise of catalyst temperature per unit time (temperature gradient) for the following reasons. If the rise of catalyst temperature per unit time is relatively small, the low-temperature NOx-storing material releases a relatively small amount of NOx per unit time; the released NOx is stored by the high-temperature NOx-storing material. If the rise of catalyst temperature per unit time is relatively large, however, the low-temperature NOx-storing material releases a large amount of NOx per unit time; most of the released NOx is not stored by the high-temperature NOx-storing material, hence escaping from the NSR catalyst 51.

For example, referring to Figure 5, if the catalyst temperature rises to Tb from Ta at which the actual NOx-storage level is Na, the low-temperature NOx-storing material releases as much NOx as the difference between the maximum possible NOx-storage level Nb at the catalyst temperature Tb and the actual NOx-storage level Na. The difference is indicated by Nc in Figure 5. If the catalyst temperature rises relatively slowly (if the temperature rise per unit time is relatively small), most of the released NOx is stored by the high-temperature NOx-storing material. On the other hand, if the catalyst temperature rises relatively quickly (equivalent to "if the NOx storage/reduction catalyst, with the low-temperature NOx-storing material having stored NOx, heats up to above a predetermined temperature and exhibits a rising temperature gradient in excess of a predetermined value" in accordance with the present invention), most of the NOx released by the low-temperature NOx-storing material (NOx in the amount of Nc Figure 5) is not stored by the high-temperature NOx-storing material, hence escaping from the NSR catalyst 51.

Similarly, if the relatively high temperature of the high-temperature NOx-storing material having stored a relatively large amount of NOx falls quickly, for example, due to a decreased engine load, the maximum possible NOx-storage level of the high-temperature NOx-storing material decreases. Also with the quick fall of catalyst temperature, the high-temperature NOx-storing material is no longer capable of maintaining its NOx storage and releases it.

The amount of NOx released from the NSR catalyst 51 varies with the fall of catalyst temperature per unit time (temperature gradient) for the following reasons. If the fall of catalyst temperature per unit time is relatively small, the high-temperature NOx-storing material releases a relatively small amount of NOx per unit time; the released NOx is stored by the low-temperature NOx-storing material. If the fall of catalyst temperature per unit time is relatively large, however, the high-temperature NOx-storing material releases a large amount of NOx per unit time; most of the released NOx is not stored by the low-temperature NOx-storing material, hence escaping from the NSR catalyst 51.

For example, referring to Figure 6, if the catalyst temperature falls to Te from Td at which the actual NOx-storage level is Nd, the high-temperature NOx-storing material releases as much NOx as the difference between the maximum possible NOx-storage level Ne at the catalyst temperature Te and the actual NOx-storage level Nd. The difference is indicated by Nf in Figure 6. If the catalyst temperature falls relatively slowly (if the temperature fall per unit time is relatively small), most of the released NOx is stored by the low-temperature NOx-storing material. On the other hand, if the catalyst temperature falls relatively quickly (equivalent to "if the NOx storage/reduction catalyst, with the high-temperature NOx-storing material having stored NOx, cools down to below a predetermined temperature, exhibits a falling temperature gradient in excess of a predetermined value" in accordance with the present invention), most of the NOx released by the high-temperature NOx-storing material (NOx in the amount of Nf in Figure 6) is not stored by the low-temperature NOx-storing material, hence escaping from the NSR catalyst 51.

If the LPL-EGR mechanism 7 recirculates EGR gas while the NSR catalyst 51 is releasing NOx as above, the released NOx is dissolved in the dew condensation water in the low-pressure EGR cooler 73 of the LPL-EGR mechanism 7 or in an intercooler 32 provided in an intake air path 3, forming an acid liquid which could negatively affect the low-pressure EGR cooler 73 and the intercooler 32.

In view of these problems, in the present embodiment, when the low-temperature NOx-storing material or the high-temperature NOx-storing material may release NOx which could be released from the NSR catalyst 51 (when it is predicted that the NSR catalyst 51 could release NOx) as a result of a quick change of the catalyst temperature, the NOx-reducing process described above is carried out to reduce NOx stored by the NSR catalyst 51, thereby reducing the amount of NOx released from the NSR catalyst 51.

More specifically, when the change of catalyst temperature per unit time is relatively small, the NSR catalyst 51 releases only a slight amount of NOx because even if one of the NOx-storing materials (e.g., the low-temperature NOx-storing material) releases NOx, the amount of NOx released per unit time is small and can be stored by the other NOx-storing material (e.g., the high-temperature NOx-storing material). It is hence judged that there is no need to carry out the NOx-reducing process. On the other hand, when the change of catalyst temperature per unit time is relatively large, the NSR catalyst 51 releases an increased amount of NOx because if one of the NOx-storing materials (e.g., the low-temperature NOx-storing material) releases NOx, the amount of NOx released per unit time is large and cannot be completely stored by the other NOx-storing material (e.g., the high-temperature NOx-storing material). Therefore, when this situation is anticipated, the NOx-reducing process is carried out to reduce NOx stored by the NSR catalyst 51, thereby reducing the amount of NOx released from the NSR catalyst 51.

The present embodiment pays special attention to the possibility that the NOx-reducing process may not be able to be carried out in some situations depending on the operating condition of the engine 1. If the NOx-reducing process cannot be carried out when the NSR catalyst 51 releases an increased amount of NOx as in the case above, the LPL-EGR mechanism 7 is prohibited from recirculating EGR gas so that there is no EGR gas flowing into the low-pressure EGR path 71. That restrains generation of acid liquid and prevents the low-pressure EGR cooler 73 and intercooler 32 from being negatively affected.

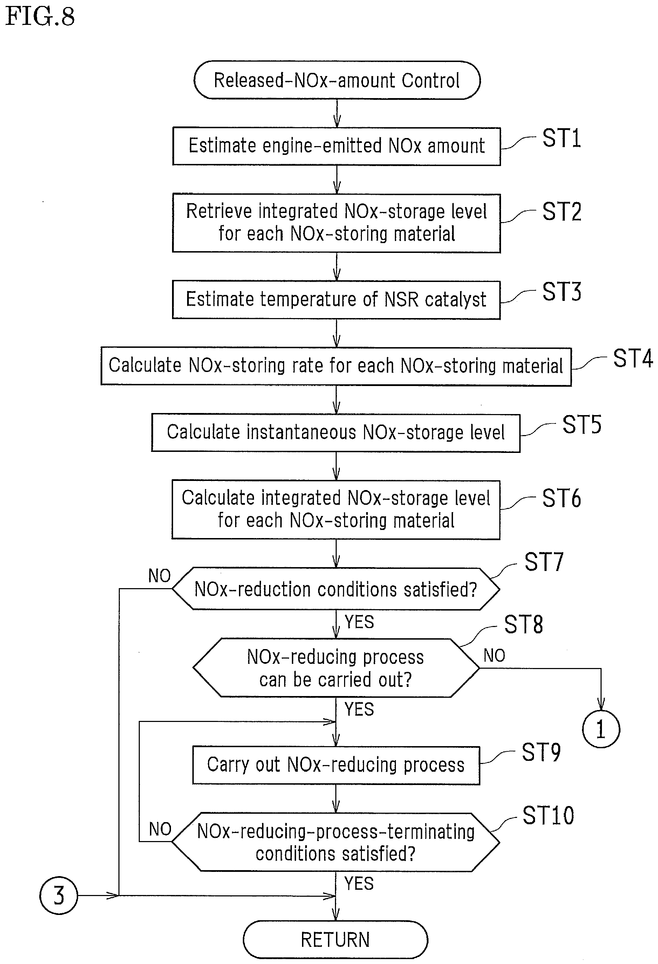

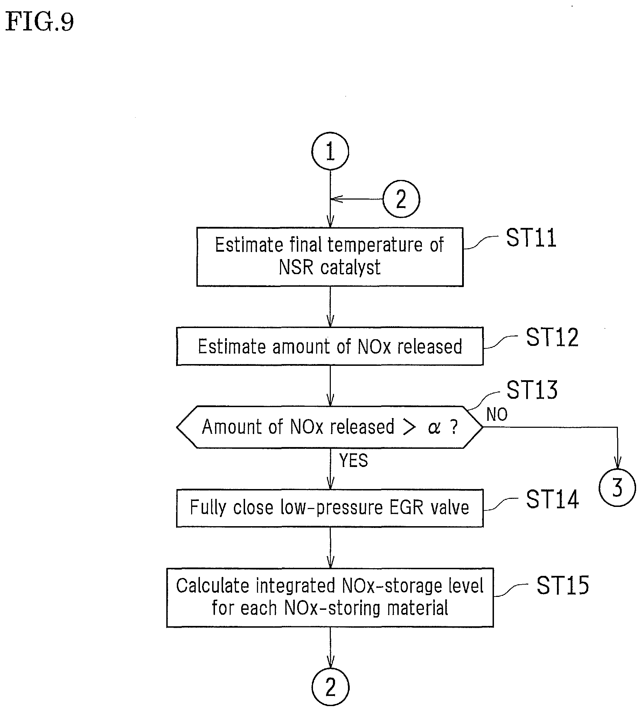

The following will describe specific procedures of the released-NOx-amount control in reference to the flow charts in Figures 8 and 9. The flow charts shown in Figures 8 and 9 show procedures carried out at predetermined periodic intervals after the engine 1 is started by turning on an ignition switch (starting switch; not shown).

First, the amount of NOx emitted from the engine 1 in the current routine (engine-emitted NOx amount) is estimated in step ST1. The engine-emitted NOx amount is estimated from the rotational speed of the engine 1, the amount of fuel injected into each cylinder 11, and other quantities related to the operating condition of the engine 1. Alternatively, the engine-emitted NOx amount may be estimated from a change of heat generation ratio for each cylinder 11, the amount of fuel injected, and other quantities related to the operating condition of the engine 1 or from a maximum (peak) heat generation ratio, the amount of fuel injected, and other quantities related to the operating condition of the engine 1. The heat generation ratio can be estimated from an estimated or measured intracylindrical pressure change (the latter is, for example, a reading on an intracylindrical pressure sensor).

After the engine-emitted NOx amount is estimated, the operation proceeds to step ST2 where an integrated NOx-storage level up to the previous routine is retrieved from the RAM (random access memory) for the ECU 10 for the low-temperature NOx-storing material and the high-temperature NOx-storing material. The integrated NOx-storage level is reset if the NOx-reducing process is carried out (in step ST9 detailed later). Therefore, the integrated NOx-storage levels retrieved in step ST2 are NOx-storage levels integrated over the period starting when the previous NOx-reducing process is completed through the previous routine for the low-temperature NOx-storing material and the high-temperature NOx-storing material respectively.

After the integrated NOx-storage levels are retrieved, the operation proceeds to step ST3 where the temperature of the NSR catalyst 51 is estimated. The temperature of the NSR catalyst 51 is estimated from the temperature of the exhaust gas detected by the exhaust gas temperature sensors 84a and 84b. Alternatively, the temperature of the NSR catalyst 51 may be estimated from a predetermined computation formula or map that is pre-recorded in the ROM for the ECU 10 using the temperature of the exhaust gas detected by the exhaust gas temperature sensors 84a and 84b, the amount of fuel injected by the injectors 2, the timing of fuel injection, etc. as parameters.

Thereafter, the operation proceeds to step ST4 where the NOx-storing rate is calculated for each NOx-storing material. The NOx-storing rate is obtained from a map shown in Figure 7 based on the temperature and NOx-storing ratio of the NSR catalyst 51. The map is stored in the ROM for the ECU 10 and designed to give a NOx-storing rate for a set of temperature of the NSR catalyst 51 (temperature of the NSR catalyst estimated in step ST3; catalyst floor temperature) and a NOx-storing ratio. Alternatively, a NOx-storing rate computation formula may be derived in advance through experiments or simulations and stored in the ROM for the ECU 10, so that a NOx-storing rate can be calculated for each NOx-storing material according to the NOx-storing rate computation formula. The NOx-storing ratio is calculated for each NOx-storing material by dividing the integrated NOx-storage level retrieved for that NOx-storing material in step ST2 by the maximum NOx-storage level of the NOx-storing material.

Thereafter, the operation proceeds to step ST5 where the amount of NOx stored newly in the current routine by the NOx-storing materials (instantaneous NOx-storage level) is calculated.

Specifically, the NOx-storage level (instantaneous NOx-storage level) is calculated for each NOx-storing material according to equations (1) and (2) below using the engine-emitted NOx amount estimated in step ST1 and the NOx-storing rate of that NOx-storing material.

$$\text{Instantaneous NOx-storage Level for Low-temperature NOx-storing}$$
$$\text{Material} = \text{Engine-emitted NOx Amount} \times \text{NOx-storing Rate of}$$
$$\text{Low-temperature NOx-storing Material} \times (\text{NOx-storing Rate of}$$
$$\text{Low-temperature NOx-storing Material} + \text{NOx-storing Rate of}$$
$$\text{High-temperature NOx-storing Material}) \ldots (1)$$

$$\text{Instantaneous NOx-storage Level for High-temperature NOx-storing Material} = \text{Engine-emitted NOx amount} \times \text{NOx-storing Rate of High-temperature NOx-storing Material} \times (\text{NOx-storing Rate of Low-temperature NOx-storing Material} + \text{NOx-storing Rate of High-temperature NOx-storing Material}) \dots (2)$$

The part of NOx that corresponds to the engine-emitted NOx amount is actually released without being absorbed by the low-temperature NOx-storing material or the high-temperature NOx-storing material. Therefore, strictly speaking, the sum of the "Instantaneous NOx-storage Level for Low-temperature NOx-storing Material" and the "Instantaneous NOx-storage Level for High-temperature NOx-storing Material" is slightly lower than the "Engine-emitted NOx Amount."

Next, the operation proceeds to step ST6 where an integrated NOx-storage level is calculated for each NOx-storing material by adding the instantaneous NOx-storage level (NOx-storage level calculated in step ST5) to the integrated NOx-storage level retrieved in step ST2. Hence, the latest integrated NOx-storage level is obtained for the low-temperature NOx-storing material and for the high-temperature NOx-storing material.

After an integrated NOx-storage level is calculated for each NOx-storing material as described in the foregoing, the operation proceeds to step ST7 where it is determined whether or not NOx-reduction conditions are satisfied.

NOx-reduction conditions are considered satisfied either if the integrated NOx-storage level of at least one of the low- and high-temperature NOx-storing materials is in excess of the requested reduction control value with no change in the temperature of the NSR catalyst 51 (i.e., if a set of NOx-reduction-performing conditions that are derived from NOx-storage level is satisfied) or if there occurs a particular change in the temperature of the NSR catalyst 51 (i.e., if a set of NOx-reduction-performing conditions that are derived from catalyst temperature change is satisfied). The following will describe each set of NOx-reduction-performing conditions.

The set of NOx-reduction-performing conditions that are derived from NOx-storage level is satisfied, for example, if the catalyst temperature is relatively low and the NOx-storage level of the low-temperature NOx-storing material has increased from TA to TB in Figure 5 so that the integrated NOx-storage level can reach the requested reduction control value for the low-temperature NOx-storing material. This set of NOx-reduction-performing conditions is also satisfied if the catalyst temperature is relatively high and the NOx-storage level of the high-temperature NOx-storing material has increased from TC to TD in Figure 6 so that the integrated NOx-storage level can reach the requested reduction control value for the high-temperature NOx-storing material.

The set of NOx-reduction-performing conditions that are derived from catalyst temperature change is satisfied, for example, if the catalyst temperature is relatively low so that the low-temperature NOx-storing material has stored a relatively large amount of NOx, and the catalyst temperature predictably rises quickly, for example, due to an increased engine load (the catalyst temperature predictably rises quickly from Ta to Tb in Figure 5 as described above). If the catalyst temperature rises in this manner, the low-temperature NOx-storing material can no longer maintain its NOx storage, releasing this amount of NOx (Nc in Figure 5). In addition, since the catalyst temperature rises quickly, most of the NOx released by the low-temperature NOx-storing material is not stored by the high-temperature NOx-storing material, hence escaping from the NSR catalyst 51. If such a situation is predicted, the set of NOx-reduction-performing conditions that are derived from catalyst temperature change is judged to be satisfied ("YES" in step ST7). Whether or not the catalyst temperature is to rise quickly is predicted by estimating how the change of the catalyst temperature (with, for example, time delay in the rise of catalyst temperature being considered) changes based on the engine load calculated from the engine rotational speed calculated from a change of the accelerator opening degree detected by the accelerator opening degree sensor 87 and an output signal from the crank position sensor 86, the amount of fuel injected by the injectors 2, the thermal capacity of the NSR catalyst 51, etc.

On the other hand, if the catalyst temperature is relatively low so that the low-temperature NOx-storing material has stored a relatively large amount of NOx, but the catalyst temperature rises at a relatively low per-unit-time rate, for example, due to an increased engine load, the high-temperature NOx-storing material can store the NOx released by the low-temperature NOx-storing material so that the NSR catalyst 51 releases only a slight or almost zero amount of NOx. Therefore, if such a situation is predicted, the set of NOx-reduction-performing conditions that are derived from catalyst temperature change is judged not to be satisfied ("NO" in step ST7).

Even for the same rise of catalyst temperature per unit time, the amount of NOx released from the NSR catalyst 51 may vary, for example, with the amount of NOx having been stored by the low-temperature NOx-storing material and the catalyst temperature reached due to the temperature rise. In other words, the more NOx the low-temperature NOx-storing material stores, the more NOx the NSR catalyst 51 releases. In addition, the higher the catalyst temperature reached due to the rise, the more NOx the NSR catalyst 51 releases. Therefore, the set of NOx-reduction conditions may or may not be satisfied depending on the amount of NOx stored by the low-temperature NOx-storing material, the catalyst temperature reached due to the temperature rise, and the rise of catalyst temperature per unit time. In other words, the set of NOx-reduction-performing conditions that are derived from catalyst temperature change is satisfied if the NSR catalyst 51, with the low-temperature NOx-storing material having stored NOx, heats up to above a predetermined temperature and (predictably) exhibits a rising temperature gradient in excess of a predetermined value.

Similarly, the set of NOx-reduction-performing conditions that are derived from catalyst temperature change is satisfied, for example, if the catalyst temperature is relatively high so that the high-temperature NOx-storing material has stored a relatively large amount of NOx, and the catalyst temperature predictably falls quickly, for example, due to a decreased engine load (the catalyst temperature predictably falls quickly from Td to Te in Figure 6 as described above). If the catalyst temperature falls in this manner, the high-temperature NOx-storing material can no longer maintain its NOx storage, releasing this amount of NOx (Nf in Figure 6). In addition, since the catalyst temperature falls quickly, most of the NOx released by the high-temperature NOx-storing material is not stored by the low-temperature NOx-storing material, hence escaping from the NSR catalyst 51. If such a situation is predicted, the set of NOx-reduction-performing conditions that are derived from catalyst temperature change is judged to be satisfied ("YES" in step ST7). Whether or not the catalyst temperature is to fall quickly is predicted by estimating how the change of the catalyst temperature (with, for example, time delay in the fall of catalyst temperature being considered) changes based on the engine load calculated from the engine rotational speed calculated from a change of the accelerator opening degree detected by the accelerator opening degree sensor 87 and an output signal from the crank position sensor 86, the amount of fuel injected by the injectors 2, the thermal capacity of the NSR catalyst 51, etc.

On the other hand, if the catalyst temperature is relatively high so that the high-temperature NOx-storing material has stored a relatively large amount of NOx, but the catalyst temperature falls at a relatively low per-unit-time rate, for example, due to a decreased engine load, the low-temperature NOx-storing material can store the NOx released by the high-temperature NOx-storing material so that the NSR catalyst 51 releases only a slight or almost zero amount of NOx. Therefore, if such a situation is predicted, the set of NOx-reduction-performing conditions that are derived from catalyst temperature change is judged not to be satisfied ("NO" in step ST7).

Even for the same fall of catalyst temperature per unit time, the amount of NOx released from the NSR catalyst 51 may vary, for example, with the amount of NOx having been stored by the high-temperature NOx-storing material and the catalyst temperature reached due to the temperature fall. In other words, the more NOx the high-temperature NOx-storing material stores, the more NOx the NSR catalyst 51 releases. In addition, the lower the catalyst temperature reached due to the fall, the more NOx the NSR catalyst 51 releases. Therefore, the set of NOx-reduction conditions may or may not be satisfied depending on the amount of NOx stored by the high-temperature NOx-storing material, the catalyst temperature reached due to the temperature fall, and the fall of catalyst temperature per unit time. In other words, the set of NOx-reduction-performing conditions that are derived from catalyst temperature change is satisfied if the NSR catalyst 51, with the high-temperature NOx-storing material having stored NOx, cools down to below a predetermined temperature and exhibits a falling temperature gradient in excess of a predetermined value.

If neither sets of the NOx-reduction conditions are satisfied (if "NO" in step ST7), the NSR catalyst 51 is determined to release only a slight or almost zero amount of NOx. The operation returns without carrying out the NOx-reducing process.

In contrast, if any of the sets of NOx-reduction conditions is satisfied (if "YES" in step ST7), the operation proceeds to step ST8 where it is determined whether or not the current operating condition of the engine 1 allows for a NOx-reducing process (whether or not the current operating condition allows the air/fuel ratio to be made richer by post-injection). For example, if the engine load that is obtained from an accelerator opening degree, an engine rotational speed, etc. is lower than a predetermined load, it is determined that a NOx-reducing process can be carried out.

If it is determined that a NOx-reducing process can be carried out ("YES" in step ST8), the operation proceeds to step ST9 where a NOx-reducing process is carried out by post-injection using the injectors 2.

The NOx-reducing process, carried out as above, lowers the oxygen concentration in the exhaust gas and increases the amounts of reducing components (e.g., HC). Hence, the NSR catalyst 51 reduces and releases the NOx that it has stored, thereby recovering its NOx-storing capability. In other words, the NSR catalyst 51 is prevented from releasing NOx in a temperature change.

It is determined in step ST10 whether or not NOx-reducing-process-terminating conditions are satisfied. If the NOx-reducing process is carried out as a result of the set of NOx-reduction-performing conditions that are derived from NOx-storage level having been satisfied, NOx-reducing-process-terminating conditions are considered satisfied when the total or a substantially total amount of the NOx currently being stored by the NSR catalyst 51 is released.

On the other hand, if the NOx-reducing process is carried out as a result of the set of NOx-reduction-performing conditions that are derived from catalyst temperature change having been satisfied, NOx-reducing-process-terminating conditions are considered satisfied at the time when fuel has been supplied (a reduction agent has been supplied) in such an amount that the supplied fuel enables reduction of the estimated amount of NOx released by the NSR catalyst 51 due to this quick catalyst temperature change (amount Nc, Nf, etc.). This amount of fuel supplied that satisfies the NOx-reducing-process-terminating conditions is specified in advance through experiments or simulations.

Then, the NOx-reducing process is continued until the NOx-reducing-process-terminating conditions are satisfied (until "YES" in step ST10). When the NOx-reducing-process-terminating conditions are satisfied, the operation returns.

Meanwhile, if the current operating condition of the engine 1 does not allow for a NOx-reducing process ("NO" in step ST8) although one of sets of the NOx-reduction conditions is satisfied ("YES" in step ST7), the operation proceeds to step ST11 (see Figure 9).

In step ST11, the final temperature of the NSR catalyst 51 (temperature ultimately reached as a result of catalyst temperature change in the current engine operating condition) is estimated. The final temperature of the NSR catalyst 51 may be estimated from a predetermined computation formula or map that is pre-recorded in the ROM for the ECU 10 using the temperature of the exhaust gas detected by the exhaust gas temperature sensors 84a and 84b, the amount of fuel injected by the injectors 2, the timing of fuel injection, etc. as parameters.

Thereafter, the operation proceeds to step ST12 where the amount of NOx released from the NSR catalyst 51 is estimated from the estimated final temperature of the NSR catalyst 51. As described above, the amount of NOx released from the NSR catalyst 51 may vary, for example, with the NOx-storage level of the NOx-storing materials, the catalyst temperature reached due to temperature change (final temperature of the NSR catalyst 51), and the per-unit-time change of catalyst temperature. Therefore, the amount of NOx released from the NSR catalyst 51 is estimated using these parameters.

Thereafter, the operation proceeds to step ST13 where it is determined whether or not the estimated amount of NOx released is in excess of a predetermined amount $\alpha$. The predetermined amount $\alpha$ is a threshold according to which it is determined whether or not the released NOx would lead to more than a predetermined concentration of acid liquid if the NOx flows into the low-pressure EGR path 71 in the LPL-EGR mechanism 7 or the intake air path 3. The predetermined amount $\alpha$ is set, for example, to 70 mg, but by no means limited to this value. When the amount of NOx released is in excess of the predetermined amount $\alpha$, the concentration of acid liquid is in excess of a predetermined value and may negatively affect the low-pressure EGR cooler 73 and the intercooler 32. Figure 11 is a graphical representation of a relationship between NOx concentration and the pH of condensed water. As could be understood from Figure 11, a higher NOx concentration translates into a lower pH of condensed water, hence a higher acid liquid concentration. If the NOx concentration is above Da in Figure 11, the pH of condensed water falls to or below a value X at which the low-pressure EGR cooler 73 and the intercooler 32 may be negatively affected. The predetermined amount $\alpha$ is specified in advance through experiments or simulations as the value at which the pH of condensed water reaches the value X.

If the estimated amount of NOx released is less than or equal to the predetermined amount $\alpha$, a relatively small amount of NOx is released. Therefore, even if the NOx flows into the low-pressure EGR path 71 in the LPL-EGR mechanism 7 and the intake air path 3, it would not negatively affect the low-pressure EGR cooler 73 and the intercooler 32 at all. The opening degree of the low-pressure EGR valve 72 is maintained (the opening degree of the low-pressure EGR valve 72 is not limited) to allow the LPL-EGR mechanism 7 to recirculate EGR gas.

On the other hand, if the estimated amount of NOx released is in excess of the predetermined amount $\alpha$ ("YES" in step ST13), the low-pressure EGR cooler 73 and the intercooler 32 may be negatively affected, and the low-pressure EGR valve 72 is fully closed in step ST14, thereby prohibiting the LPL-EGR mechanism 7 from recirculating EGR gas.

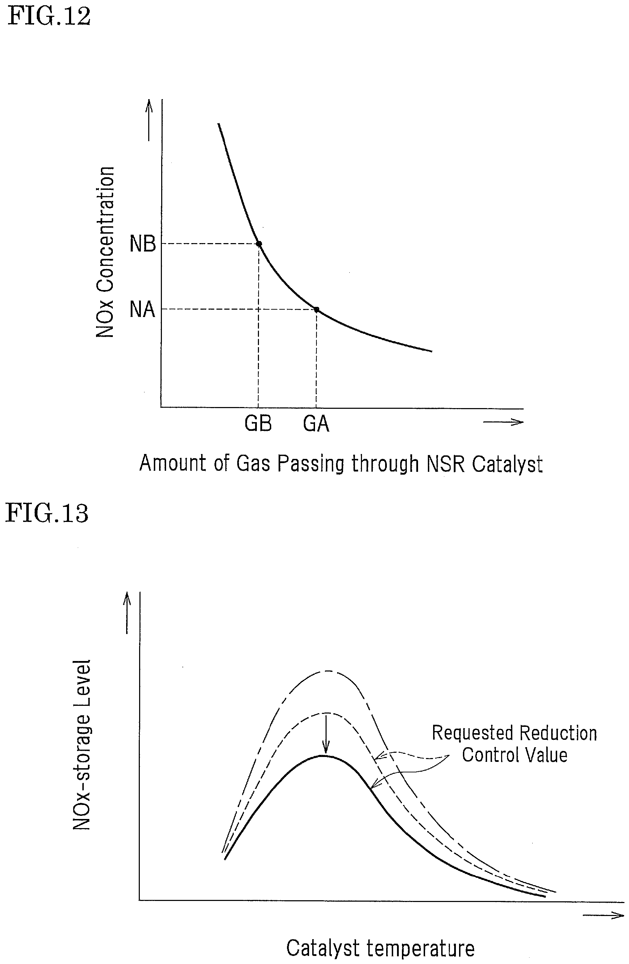

Figure 12 is a graphical representation of a relationship between the amount of gas that passes through the NSR catalyst 51 and NOx concentration. If a large amount of gas passes through the NSR catalyst 51, the NOx concentration becomes lower for the predetermined amount of NOx being released. In other words, for the same amount of NOx released, the NOx concentration becomes lower if the amount of gas passing through the NSR catalyst 51 is equal to GA (the NOx concentration is equal to NA) than if the amount of gas passing through the NSR catalyst 51 is equal to GB (the NOx concentration is equal to NB). Therefore, if it is determined from the amount of NOx released and the amount of gas passing through the NSR catalyst 51 that the NOx concentration is less than or equal to a predetermined value, the opening degree of the low-pressure EGR valve 72 is not restricted. If the NOx concentration is in excess of the predetermined value, the low-pressure EGR valve 72 is fully closed, thereby prohibiting the LPL-EGR mechanism 7 from recirculating EGR gas. The amount of gas passing through the NSR catalyst 51 is calculated using the amount of air detected by the air flow meter 81, the EGR gas recirculation amount (aforementioned estimated high-pressure EGR gas recirculation amount and estimated low-pressure EGR gas recirculation amount) for the EGR mechanisms 6 and 7, etc. as parameters.

The operation proceeds to step ST15 with the recirculation of EGR gas being prohibited in this manner. Then, similarly to step ST6, the integrated NOx-storage levels for the NOx-storing materials are calculated before the operation returns to step ST11. Steps ST11 to ST15 are repeated until the estimated amount of NOx released becomes less than or equal to the predetermined amount $\alpha$, that is, until the low-pressure EGR valve 72 may be allowed to open. When the estimated amount of NOx released becomes less than or equal to the predetermined amount $\alpha$ ("NO" in step ST13), the low-pressure EGR valve 72 is allowed to open before the operation returns. The operation explained so far is repeatedly carried out.

As described above, in the present embodiment, if it is predicted that either the low-temperature NOx-storing material or the high-temperature NOx-storing material may release NOx as a result of a quick change of the catalyst temperature so that the NOx could escape from the NSR catalyst 51, the NOx-reducing process is carried out to reduce NOx stored by the NSR catalyst 51. That reduces the amount of NOx released from the NSR catalyst 51 due to temperature change, which in turn prevents acid liquid from being produced and prevents the low-pressure EGR cooler 73 and the intercooler 32 from being negatively affected.

The NOx-reducing process is carried out only when NOx could be released from the NSR catalyst 51. The arrangement prevents the NOx-reducing process from being unnecessarily carried out, thereby improving the fuel consumption ratio and restraining fuel from diluting oil (injection fuel could dilute engine oil if it sticks to inner cylindrical walls).

The LPL-EGR mechanism 7 is set up not to recirculate exhaust gas when the NOx-reducing process cannot be carried out. This arrangement also prevents acid liquid from being produced in the LPL-EGR mechanism 7 and the intake air path 3 and preventing the low-pressure EGR cooler 73 and the intercooler 32 from being negatively affected.

Variation Example

Next, a variation example will be described that relates to the control carried out when NOx has been emitted into the air because the LPL-EGR mechanism 7 is prohibited from recirculating EGR gas (the low-pressure EGR valve 72 is fully closed) in the embodiment above.

Specifically, if NOx has been emitted into the air, the frequency at which the NOx-reducing process is carried out is increased by lowering the requested reduction control value, in order to decrease the amount of NOx released into the air in comparison to the amount prior to the changing of the requested reduction control value (in comparison to when the requested reduction control value is high).

Before the NOx-storage level for the NSR catalyst 51 reaches the requested reduction control value, not all NOx can be stored by the NSR catalyst 51, and a small amount of NOx is emitted into the air. The amount of NOx released into the air increases with a falling frequency of the NOx-reducing process. In other words, the amount of NOx released into the air decreases with a rising frequency of the NOx-reducing process.

Therefore, in this variation example, if NOx has been emitted into the air because the LPL-EGR mechanism 7 is prohibited from recirculating EGR gas, the frequency of the NOx-reducing process is increased by lowering the requested reduction control value, in order to reduce the amount of NOx released into the air (in comparison to the amount when the requested reduction control value is set to a higher value). The following will give more specific details.

The amount of NOx released into the air when the LPL-EGR mechanism 7 is prohibited from recirculating EGR gas as in the embodiment above is calculated. The frequency of the NOx-reducing process is then increased by lowering the requested reduction control value until the amount of NOx is reduced by as much as the calculated amount of NOx released into the air.

Figure 13 is a graphical representation of a relationship between the temperature and NOx-storage level of the NSR catalyst when the requested reduction control value of the low-temperature NOx-storing material is changed. The requested reduction control value is set relatively high as shown by a broken line in Figure 13 when the NSR catalyst 51 does not emit NOx into the air (when EGR gas is not prohibited from being recirculated). On the other hand, when the NSR catalyst 51 has emitted NOx into the air due to the prohibition of the recirculation of EGR gas, the requested reduction control value is changed to a relatively low value as shown by a solid line in Figure 13, which increases the frequency of the NOx-reducing process.

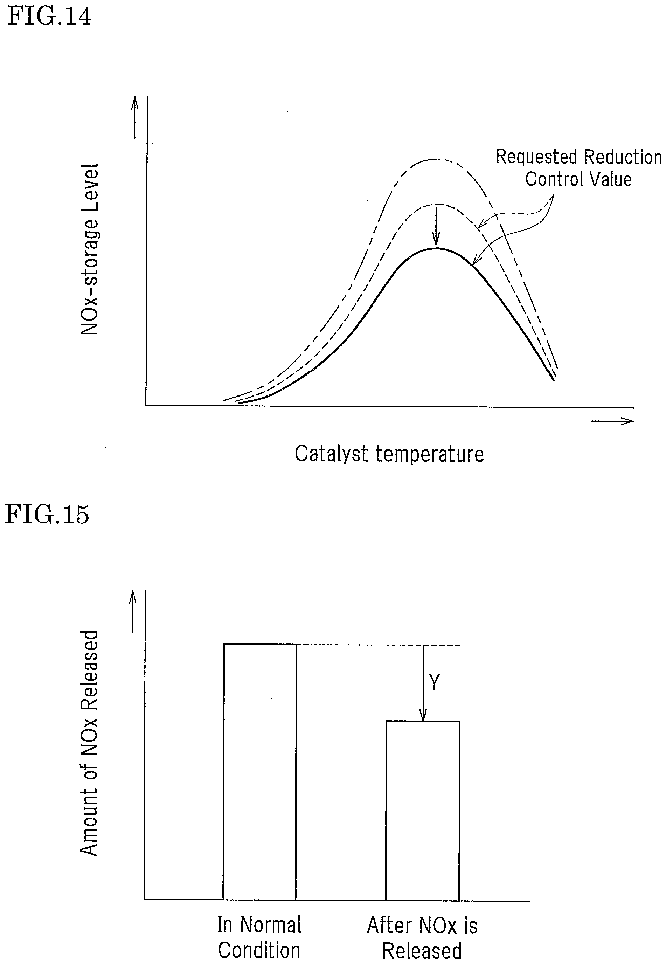

Similarly, Figure 14 is a graphical representation of a relationship between the temperature and NOx-storage level of the NSR catalyst when the requested reduction control value of the high-temperature NOx-storing material is changed. The requested reduction control value is set relatively high as shown by a broken line in Figure 14 when the NSR catalyst 51 does not emit NOx into the air. On the other hand, when the NSR catalyst 51 has emitted NOx into the air due to the prohibition of the recirculation of EGR gas, the requested reduction control value is changed to a relatively low value as shown by a solid line in Figure 14, which increases the frequency of the NOx-reducing process.

The increased frequency of the NOx-reducing process reduces the amount of NOx released from the NSR catalyst 51 into the air in comparison to the amount when the frequency of the NOx-reducing process is low. When the reduced total amount of NOx reaches an amount corresponding to the amount of NOx emitted into the air due to the prohibition of the recirculation of EGR gas, the requested reduction control value is returned to its original value (the values indicated by a broken line in Figures 13 and 14).

This control cancels out adverse effects of the prohibition of the recirculation of EGR gas on the environment.

In this variation example, the requested reduction control value for the low-temperature NOx-storing material and the requested reduction control value for the high-temperature NOx-storing material may both be changed. Alternatively, only one of the requested reduction control values may be changed according to the catalyst temperature. Specifically, if the catalyst temperature is relatively low (e.g., below 300°C) and the low-temperature NOx-storing material has a high capability, only the requested reduction control value for the low-temperature NOx-storing material may be changed, whereas if the catalyst temperature is relatively high (e.g., 300°C or higher) and the high-temperature NOx-storing material has a high capability, only the requested reduction control value for the high-temperature NOx-storing material may be changed.

Figure 15 shows the amount of NOx released into the air per unit distance of travel before the requested reduction control value is corrected (indicated by a broken line in Figures 13 and 14) and the amount of NOx released into the air per unit distance of travel after the requested reduction control value is corrected (indicated by a solid line in Figures 13 and 14). Correcting the requested reduction control value in this manner reduces the amount of NOx released into the air (the reduction per unit distance of travel is indicated by Y in Figure 15). In other words, the reduction Y per unit distance of travel is integrated, and when the total reduction matches the amount of NOx emitted into the air due to the prohibition of the recirculation of EGR gas, the requested reduction control value is returned to its original value.

More specifically, letting Z (g) denote the amount of NOx emitted into the air due to the prohibition of the recirculation of EGR gas and Y (g/km) denote the reduction per unit distance of travel due to the correction of the requested reduction control value, the requested reduction control value is returned to its original value when traveling distance has reached Z/Y (km).

Other Embodiments and Variation Examples

The embodiment and the variation example above are applications of the present invention to an inline four-cylinder diesel engine mounted to an automobile. The present invention is applicable to engines used for other purposes, as well as for automobile engines. The present invention by no means limits the number of cylinders or the type of engine (the engine may be, for example, an inline engine, a V-engine, or a horizontally opposed engine).

The embodiment and the variation example above are applications of the present invention to the engine 1 with the two EGR mechanisms 6 and 7. This is by no means intended to be limiting the present invention. Alternatively, the present invention may be applied to engines with a single EGR mechanism (only a LPL-EGR mechanism) and engines with three or more EGR mechanisms.

The embodiment and the variation example above describe the NSR catalyst 51 carrying thereon two types of NOx-storing materials with different temperature characteristics. The present invention is also applicable to a NSR catalyst 51 carrying thereon three or more types of NOx-storing materials with different temperature characteristics. When this is the case, the amount of NOx released is calculated according to catalyst temperature change for each NOx-storing material.

The embodiment and the variation example above use the NSR catalyst 51 as a NOx storage/reduction catalyst. This is by no means intended to be limiting the present invention. Alternatively, a DPNR catalyst may be used.

The embodiment and the variation example above involve post-injection by the injectors 2 as a NOx-reducing process. Alternatively, the exhaust gas emission system may include a fuel addition valve so that the NOx-reducing process can be carried out by fuel addition using the fuel addition valve.

Industrial Applicability

The present invention is applicable to control of a diesel engine with a LPL-EGR mechanism that recirculates EGR gas from the downstream of a NSR catalyst to an intake air system.

Reference Signs List

| | |
|---|---|
| 1 | Engine (Internal Combustion Engine) |
| 2 | Injector |
| 3 | Intake Air Path (Intake Air System) |
| 32 | Intercooler |
| 5 | Exhaust Air Path (Exhaust Gas Emission System) |
| 51 | NSR Catalyst (NOx Storage/Reduction Catalyst) |
| 7 | LPL-EGR Mechanism |
| 71 | Low-pressure EGR Path |
| 72 | Low-pressure EGR Valve |
| 73 | Low-pressure EGR Cooler |
| 10 | ECU |
| 84a, 84b | Exhaust Gas Temperature Sensor |

**Claims**

1. An internal combustion engine with a control device, the internal combustion engine including an exhaust gas emission system housing a NOx storage/reduction catalyst containing a plurality of NOx-storing materials that have different, temperature-dependent NOx-storing properties, the internal combustion engine being capable of a NOx-reducing process to reduce NOx stored by the NOx storage/reduction catalyst by reducing an oxygen concentration in the exhaust gas emission system to achieve a rich exhaust air/fuel ratio,

   the plurality of NOx-storing materials including at least a high-temperature NOx-storing material that exhibits optimal NOx-storing performance at higher temperatures than does the other NOx-storing material and a low-temperature NOx-storing material that exhibits optimal NOx-storing performance at lower temperatures than does the other NOx-storing material,
   **characterized by** the internal combustion engine comprising means for carrying out the NOx-reducing process if the NOx storage/reduction catalyst, with the low-temperature NOx-storing material having stored NOx, heats up to above a predetermined temperature and exhibits a rising temperature gradient in excess of a predetermined value so that the low-temperature NOx-storing material releases NOx.

2. An internal combustion engine with a control device, the internal combustion engine including an exhaust gas emission system housing a NOx storage/reduction catalyst containing a plurality of NOx-storing materials that have different, temperature-dependent NOx-storing properties, the internal combustion engine being capable of a NOx-reducing process to reduce NOx stored by the NOx storage/reduction catalyst by reducing an oxygen concentration in the exhaust gas emission system to achieve a rich exhaust air/fuel ratio,

   the plurality of NOx-storing materials including at least a high-temperature NOx-storing material that exhibits optimal NOx-storing performance at higher temperatures than does the other NOx-storing material and a low-temperature NOx-storing material that exhibits optimal NOx-storing performance at lower temperatures than does the other NOx-storing material,
   **characterized by** the internal combustion engine comprising means for carrying out the NOx-reducing process if the NOx storage/reduction catalyst, with the high-temperature NOx-storing material having stored NOx, cools down to below a predetermined temperature and exhibits a falling temperature gradient in excess of a predetermined value.

3. The internal combustion engine as set forth in claim 1,

   the internal combustion engine including an EGR mechanism that recirculates part, of exhaust gas, that has passed through the NOx storage/reduction catalyst to an intake air system, and
   the EGR mechanism not recirculating exhaust gas if the NOx storage/reduction catalyst, with the low-temperature NOx-storing material having stored NOx, heats up to above a predetermined temperature, exhibits a rising temperature gradient in excess of a predetermined value, and while the internal combustion engine is operating in such a condition that the internal combustion engine is not capable of carrying out the NOx-reducing process, releases more than a predetermined amount of NOx,

4. The internal combustion engine as set forth in claim 2,

   the internal combustion engine including an EGR mechanism that recirculates part, of exhaust gas, that has passed through the NOx storage/reduction catalyst to an intake air system, and
   the EGR mechanism not recirculating exhaust gas if the NOx storage/reduction catalyst, with the high-temperature NOx-storing material having stored NOx, cools down to below a predetermined temperature, exhibits a falling temperature gradient in excess of a predetermined value, and while the internal combustion engine is operating in such a condition that the internal combustion engine is not capable of carrying out the NOx-reducing process, releases more than a predetermined amount of NOx.

5. The internal combustion engine as set forth in claim 3,

   the internal combustion engine carrying out the NOx-reducing process when the low-temperature NOx-storing material has stored a predetermined threshold amount of NOx, and
   said control device changing the threshold amount to a lower value if the exhaust gas emission system emits not less than a predetermined amount of NOx while the EGR mechanism is prohibited from recirculating exhaust gas.

6. The internal combustion engine as set forth in claim 4,

the internal combustion engine carrying out the NOx-reducing process when the high-temperature NOx-storing material has stored a predetermined threshold amount of NOx, and
said control device changing the threshold amount to a lower value if the exhaust gas emission system emits not less than a predetermined amount of NOx while the EGR mechanism is prohibited from recirculating exhaust gas.

7. The internal combustion engine as set forth in claim 5 or 6,
said control device restores the threshold amount to an original value when an amount of NOx released by the NOx storage/reduction catalyst decreases due to the threshold amount being changed to a lower value by substantially as much as an amount of NOx released by the exhaust gas emission system due to the EGR mechanism being prevented from recirculating exhaust gas.


**Patentansprüche**

1. Verbrennungskraftmaschine mit einer Steuervorrichtung, wobei die Verbrennungskraftmaschine ein Abgasemissionssystem, das einen $NO_x$-Speicherreduktionskatalysator aufnimmt, der eine Mehrzahl an $NO_x$-speichernden Materialien enthält, die unterschiedliche, temperaturabhängige $NO_x$-Speichereigenschaften aufweisen, beinhaltet, wobei die Verbrennungskraftmaschine in der Lage ist, einen $NO_x$-Reduktionsvorgang durchzuführen, um $NO_x$ zu reduzieren, das durch den $NO_x$-Speicherreduktionskatalysator gespeichert wird, indem eine Sauerstoffkonzentration in dem Abgasemissionssystem reduziert wird, um ein fettes Abgasluft-/Kraftstoff-Verhältnis zu erreichen, wobei die Mehrzahl an $NO_x$-speichernden Materialien zumindest ein Hochtemperatur-$NO_x$-speicherndes Material, das eine optimalere $NO_x$-Speicherleistung bei hohen Temperaturen bietet als das andere $NO_x$-speichernde Material, und ein Niedrigtemperatur-$NO_x$-speicherndes Material, das eine optimalere $NO_x$-Speicherleistung bei niedrigen Temperaturen bietet als das andere $NO_x$-speichernde Material, beinhaltet, die Verbrennungskraftmaschine eine Einrichtung zum Durchführen des $NO_x$-Reduktionsvorgangs aufweist, falls sich der $NO_x$-Speicherreduktionskatalysator, bei dem das Niedrigtemperatur-$NO_x$-speichernde Material $NO_x$ gespeichert hat, auf eine Temperatur oberhalb einer vorgegebenen Temperatur aufheizt und einen ansteigenden Temperaturgradienten oberhalb eines vorgegebenen Werts aufweist, so dass das Niedrigtemperatur-$NO_x$-speichernde Material $NO_x$ freisetzt.

2. Verbrennungskraftmaschine mit einer Steuervorrichtung, wobei die Verbrennungskraftmaschine ein Abgasemissionssystem, das einen $NO_x$-Speicherreduktionskatalysator aufnimmt, der eine Mehrzahl an $NO_x$-speichernden Materialien enthält, die unterschiedliche, temperaturabhängige $NO_x$-Speichereigenschaften aufweisen, beinhaltet, wobei die Verbrennungskraftmaschine in der Lage ist, einen $NO_x$-Reduktionsvorgang durchzuführen, um $NO_x$ zu reduzieren, das durch den $NO_x$-Speicherreduktionskatalysator gespeichert wird, indem eine Sauerstoffkonzentration in dem Abgasemissionssystem reduziert wird, um ein fettes Abgasluft-/Kraftstoff-Verhältnis zu erreichen, wobei die Mehrzahl an $NO_x$-speichernden Materialien zumindest ein Hochtemperatur-$NO_x$-speicherndes Material, das eine optimalere $NO_x$-Speicherleistung bei hohen Temperaturen bietet als das andere $NO_x$-speichernde Material, und ein Niedrigtemperatur-$NO_x$-speicherndes Material, das eine optimalere $NO_x$-Speicherleistung bei niedrigen Temperaturen bietet als das andere $NO_x$-speichernde Material, beinhaltet, **dadurch gekennzeichnet, dass** die Verbrennungskraftmaschine eine Einrichtung zum Durchführen des $NO_x$-Reduktionsvorgangs aufweist, falls sich der $NO_x$-Speicherreduktionskatalysator, bei dem das Hochtemperatur-$NO_x$-speichernde Material $NO_x$ gespeichert hat, auf eine Temperatur unterhalb einer vorgegebenen Temperatur abkühlt und einen fallenden Temperaturgradienten oberhalb eines vorgegebenen Werts aufweist.

3. Verbrennungskraftmaschine nach Anspruch 1,
wobei die Verbrennungskraftmaschine einen AGR-Mechanismus beinhaltet, der einen Teil des Abgases, das durch den $NO_x$-Speicherreduktionskatalysator geströmt ist, zu einem Ansaugsystem rückführt, und wobei der AGR-Mechanismus kein Abgas rückführt, falls sich der $NO_x$-Speicherreduktionskatalysator mit dem Niedrigtemperatur-$NO_x$-Speichermaterial, in dem $NO_x$ gespeichert ist, auf eine Temperatur oberhalb einer vorgegebenen Temperatur aufheizt, einen ansteigenden Temperaturgradienten oberhalb eines vorgegebenen Werts aufweist, und, während die Verbrennungskraftmaschine unter einer solchen Bedingung betrieben wird, dass die Verbrennungskraftmaschine nicht in der Lage ist, den $NO_x$-Reduktionsvorgang durchzuführen, mehr als eine vorgegebene Menge

an NO$_x$ freisetzt.

4. Verbrennungskraftmaschine nach Anspruch 2,
wobei die Verbrennungskraftmaschine einen AGR-Mechanismus beinhaltet, der einen Teil des Abgases, das durch den NO$_x$-Speicherreduktionskatalysator geströmt ist, zu einem Ansaugsystem rückführt, und
wobei der AGR-Mechanismus kein Abgas rückführt, falls sich der NO$_x$-Speicherreduktionskatalysator mit dem Hochtemperatur-NO$_x$-Speichermaterial, in dem NO$_x$ gespeichert ist, auf eine Temperatur unterhalb einer vorgegebenen Temperatur abkühlt, einen fallenden Temperaturgradienten oberhalb eines vorgegebenen Werts aufweist, und, während die Verbrennungskraftmaschine unter einer solchen Bedingung betrieben wird, dass die Verbrennungskraftmaschine nicht in der Lage ist, den NO$_x$-Reduktionsvorgang durchzuführen, mehr als eine vorgegebene Menge an NO$_x$ freisetzt.

5. Verbrennungskraftmaschine nach Anspruch 3,
wobei die Verbrennungskraftmaschine den NO$_x$-Reduktionsvorgang durchführt, wenn das Niedrigtemperatur-NO$_x$-speichernde Material eine vorgegebene Schwellenmenge an NO$_x$ gespeichert hat, und
wobei die Steuervorrichtung die Schwellenmenge auf einen niedrigeren Wert ändert, falls das Abgasemissionssystem nicht weniger als eine vorgegebene Menge an NO$_x$ emittiert, während verhindert wird, dass der AGR-Mechanismus Abgas rückführt.

6. Verbrennungskraftmaschine nach Anspruch 4,
wobei die Verbrennungskraftmaschine den NO$_x$-Reduktionsvorgang durchführt, wenn das Hochtemperatur-NO$_x$-speichernde Material eine vorgegebene Schwellenmenge an NO$_x$ gespeichert hat, und
wobei die Steuervorrichtung die Schwellenmenge auf einen niedrigeren Wert ändert, falls das Abgasemissionssystem nicht weniger als eine vorgegebene Menge an NO$_x$ emittiert, während verhindert wird, dass der AGR-Mechanismus Abgas rückführt.

7. Verbrennungskraftmaschine nach Anspruch 5 oder 6,
wobei die Steuervorrichtung die Schwellenmenge auf einen ursprünglichen Wert wiederherstellt, wenn eine Menge an NO$_x$, die von dem NO$_x$-Speicherreduktionskatalysator freigesetzt wird, deswegen abnimmt, weil die Schwellenmenge auf einen niedrigeren Wert geändert wird, der im Wesentlichen um so viel niedriger ist wie eine Menge an NO$_x$, die durch das Abgasemissionssystem deswegen freigesetzt wird, weil verhindert wird, dass der AGR-Mechanismus Abgas rückführt.

**Revendications**

1. Moteur à combustion interne avec un dispositif de commande, le moteur à combustion interne comprenant un système d'émission de gaz d'échappement abritant un catalyseur de réduction/stockage de NOx contenant une pluralité de matériaux de stockage de NOx qui présentent des propriétés de stockage de NOx dépendant de la température différentes, le moteur à combustion interne pouvant exécuter un processus de réduction de NOx pour réduire le NOx stocké par le catalyseur de réduction/stockage de NOx en réduisant une concentration d'oxygène dans le système d'émission de gaz d'échappement pour obtenir un rapport carburant/air d'échappement riche,
la pluralité de matériaux de stockage de NOx comprenant au moins un matériau de stockage de NOx à haute température qui affiche une performance de stockage de NOx optimale à des températures plus élevées comparativement à l'autre matériau de stockage de NOx et un matériau de stockage de NOx à basse température qui affiche une performance de stockage de NOx optimale à des températures plus basses comparativement à l'autre matériau de stockage de NOx,
**caractérisé par** le moteur à combustion interne comprenant des moyens pour exécuter le processus de réduction de NOx si le catalyseur de réduction/stockage de NOx, avec le matériau de stockage de NOx à basse température ayant stocké du NOx, chauffe à une température supérieure à une température prédéterminée et affiche un gradient de température croissant qui dépasse une valeur prédéterminée de sorte que le matériau de stockage de NOx dégage du NOx.

2. Moteur à combustion interne avec un dispositif de commande, le moteur à combustion interne comprenant un système d'émission de gaz d'échappement abritant un catalyseur de réduction/stockage de NOx contenant une pluralité de matériaux de stockage de NOx qui présentent des propriétés de stockage de NOx dépendant de la température différentes, le moteur à combustion interne pouvant exécuter un processus de réduction de NOx pour réduire le NOx stocké par le catalyseur de réduction/stockage de NOx en réduisant une concentration d'oxygène dans le système d'émission de gaz d'échappement pour obtenir un rapport carburant/air d'échappement riche, la pluralité de matériaux de stockage de NOx comprenant au moins un matériau de stockage de NOx à haute température qui affiche une performance de stockage de NOx optimale à des températures plus élevées comparativement à l'autre matériau de stockage de NOx et un matériau de stockage de NOx à basse température qui affiche une performance de stockage de NOx optimale à des températures plus basses comparativement à l'autre matériau de stockage de NOx, et

**caractérisé par** le moteur à combustion interne comprenant des moyens pour exécuter le processus de réduction de NOx si le catalyseur de réduction/stockage de NOx, avec le matériau de stockage de NOx à haute température ayant stocké du NOx, refroidit à une température inférieure à une température prédéterminée et affiche un gradient de température décroissant qui dépasse une valeur prédéterminée.

3. Moteur à combustion interne selon la revendication 1,
le moteur à combustion interne comprenant un mécanisme de recyclage de gaz d'échappement (RGE) qui remet en circulation une partie du gaz d'échappement qui est passé à travers le catalyseur de réduction/stockage de NOx vers un système d'air d'entrée, et
le mécanisme RGE ne remet pas en circulation les gaz d'échappement si le catalyseur de réduction/stockage de NOx, avec le matériau de stockage de NOx à basse température ayant stocké du NOx, chauffe à une température supérieure à une température prédéterminée, affiche un gradient de température croissant qui dépasse une valeur prédéterminée, et tandis que le moteur à combustion interne est en opération dans une condition telle que le moteur à combustion interne ne peut pas exécuter le processus de réduction de NOx, libère une quantité de NOx plus importante qu'une quantité prédéterminée.

4. Moteur à combustion interne selon la revendication 2,
le moteur à combustion interne comprenant un mécanisme RGE qui remet en circulation une partie du gaz d'échappement qui est passé à travers le catalyseur de réduction/stockage de NOx vers un système d'air d'entrée, et
le mécanisme RGE ne remet pas en circulation les gaz d'échappement si le catalyseur de réduction/stockage de NOx, avec le matériau de stockage de NOx à haute température ayant stocké du NOx, refroidit à une température inférieure à une température prédéterminée, affiche un gradient de température décroissant qui dépasse une valeur prédéterminée, et tandis que le moteur à combustion interne est en opération dans une condition telle que le moteur à combustion interne ne peut pas exécuter le processus de réduction de NOx, libère une quantité de NOx plus importante qu'une quantité prédéterminée.

5. Moteur à combustion interne selon la revendication 3,
le moteur à combustion interne exécutant le processus de réduction de NOx quand le matériau de stockage de NOx à basse température a stocké une quantité de seuil prédéterminée de NOx, et
ledit dispositif de commande modifiant la quantité de seuil à une valeur inférieure si le système d'émission de gaz d'échappement émet une quantité non inférieure à une quantité prédéterminée de NOx tandis que le mécanisme RGE est empêché de remettre en circulation un gaz d'échappement.

6. Moteur à combustion interne selon la revendication 4,
le moteur à combustion interne exécutant le processus de réduction de NOx quand le matériau de stockage de NOx à haute température a stocké une quantité de seuil prédéterminée de NOx, et
ledit dispositif de commande modifiant la quantité de seuil à une valeur inférieure si le système d'émission de gaz d'échappement émet une quantité non inférieure à une quantité prédéterminée de NOx tandis que le mécanisme RGE est empêché de remettre en circulation un gaz d'échappement.

7. Moteur à combustion interne selon la revendication 5 ou 6,
ledit dispositif de commande replace la quantité de seuil à une valeur d'origine quand une quantité de NOx libérée par le catalyseur de réduction/stockage de NOx diminue en raison de la modification de la quantité de seuil vers une valeur inférieure selon une quantité essentiellement égale à une quantité de NOx libérée par le système d'émission de gaz d'échappement en raison du fait que le mécanisme RGE est empêché de remettre en circulation un gaz d'échappement.

FIG.1

EP 2 826 970 B1

FIG.2

FIG.3

Engine Load

X

LPL

MPL

HPL

Engine Rotational Speed

FIG.4

Engine Load

X

HPL

Engine Rotational Speed

FIG.5

FIG.6

FIG.7

(a)

Low Catalyst Temperature Range

NOx-storing Rate

Low-temperature
NOx-storing Material

High-temperature
NOx-storing Material

0    NOx-storing Ratio    1

(b)

Intermediate Catalyst Temperature Range

NOx-storing Rate

High-temperature
NOx-storing Material

Low-temperature
NOx-storing Material

0    NOx-storing Ratio    1

(c)

High Catalyst Temperature Range

NOx-storing Rate

High-temperature
NOx-storing Material

Low-temperature
NOx-storing Material

0    NOx-storing Ratio    1

FIG.8

```
           ┌─────────────────────────────┐
           │ Released-NOx-amount Control │
           └─────────────────────────────┘
                        │
           ┌─────────────────────────────┐  ── ST1
           │ Estimate engine-emitted NOx amount │
           └─────────────────────────────┘
                        │
           ┌─────────────────────────────┐  ── ST2
           │ Retrieve integrated NOx-storage level │
           │   for each NOx-storing material       │
           └─────────────────────────────┘
                        │
           ┌─────────────────────────────┐  ── ST3
           │ Estimate temperature of NSR catalyst │
           └─────────────────────────────┘
                        │
       ┌───────────────────────────────────────────┐  ── ST4
       │ Calculate NOx-storing rate for each NOx-storing material │
       └───────────────────────────────────────────┘
                        │
           ┌─────────────────────────────┐  ── ST5
           │ Calculate instantaneous NOx-storage level │
           └─────────────────────────────┘
                        │
           ┌─────────────────────────────┐  ── ST6
           │ Calculate integrated NOx-storage level │
           │    for each NOx-storing material       │
           └─────────────────────────────┘
                        │
     NO    ╱───────────────────────────────╲  ── ST7
    ◄──────   NOx-reduction conditions satisfied?  
           ╲───────────────────────────────╱
                        │ YES
                 ╱──────────────────────╲  ── ST8      NO
                   NOx-reducing process        ────────────►  ( 1 )
                 ╲  can be carried out?  ╱
                        │ YES
           ┌─────────────────────────────┐  ── ST9
           │ Carry out NOx-reducing process │
           └─────────────────────────────┘
                        │
    NO    ╱───────────────────────────────╲  ── ST10
   ◄──────   NOx-reducing-process-terminating
           ╲     conditions satisfied?    ╱
                        │ YES
    ( 3 )──────────────►│
                 ┌──────────────┐
                 │    RETURN    │
                 └──────────────┘
```

29

# FIG.9

① 

② 

Estimate final temperature of NSR catalyst — ST11

Estimate amount of NOx released — ST12

Amount of NOx released > $\alpha$ ? — ST13 — NO → ③

YES

Fully close low-pressure EGR valve — ST14

Calculate integrated NOx-storage level for each NOx-storing material — ST15

②

## FIG.10

## FIG.11

FIG.12

Amount of Gas Passing through NSR Catalyst

FIG.13

Catalyst temperature

FIG.14

FIG.15

FIG.16

**EP 2 826 970 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001207916 A
- JP 2011089470 A
- JP 2009085018 A
- JP 2006150258 A
- EP 2241731 A1
- EP 1256704 A2
- JP 2011127561 A
- JP 2012007544 A